Europäisches Patentamt

European Patent Office

Office européen des brevets

(19)

(11) EP 1 067 788 A2

(12) **EUROPEAN PATENT APPLICATION**

(43) Date of publication:
10.01.2001 Bulletin 2001/02

(51) Int Cl.⁷: $H04N\ 5/782$

(21) Application number: 00114427.8

(22) Date of filing: 05.07.2000

(84) Designated Contracting States:
AT BE CH CY DE DK ES FI FR GB GR IE IT LI LU
MC NL PT SE
Designated Extension States:
AL LT LV MK RO SI

(30) Priority: 05.07.1999 JP 19069399

(71) Applicant: SONY CORPORATION
Tokyo (JP)

(72) Inventors:
• Abe, Mototsugu
  Shinagawa-ku, Tokyo (JP)
• Matsumoto, Jun
  Shinagawa-ku, Tokyo (JP)
• Nishiguchi, Masayuki
  Shinagawa-ku, Tokyo (JP)

(74) Representative: Melzer, Wolfgang, Dipl.-Ing. et al
Patentanwälte Mitscherlich & Partner,
Postfach 33 06 09
80066 München (DE)

(54) **Device and method of signal processing**

(57) In order to correctly and surely sort and classify various broadcast programs' contents or categories, in a short time signal processing part 3, an intermediate time signal processing part 4, and a long time signal processing part 5, a video signal and a voice signal of a broadcast program are framed by respective hierarchical distinct time sections (a short tune frame, an intermediate time frame, and a long time frame), and the video signals and the voice signals in frames are processed. A stream processing part 6 determines a category of a broadcast program from a program category classification vector $y_r$ and a history update coefficient $\xi$ obtained from the long time signal processing part 5 of a final part.

FIG.1

EP 1 067 788 A2

**Description**

BACKGROUND OF THE INVENTION

[Field of the Invention]

The present invention relates to a device and a method of signal processing, and more particularly to a device and a method of signal processing in which a category of a signal, such as, for example, of a broadcast program recorded or the like broadcasted or recorded can automatically be determined.

[Description of the Prior Art]

Conventionally, for example, when various programs by a general television broadcasting, a cable television broadcasting, a satellite broadcasting, a communications satellite broadcasting, a radio broadcasting, or the like is recorded by a reservation (picture recording by a reservation or sound recording by a reservation) by a recorder (a picture recorder or a sound recorder), a reservation for recording is made in advance for appointing a channel to be recorded (broadcast channel, frequency) and starting time and finishing time of recording for the recorder. However, in an actual broadcasting, for example, a change in the length of a program frequently occurs by an extension of a live relay broadcast program and the like, and thus a failure in a reservation for recording by a recorder has frequently occurred.

In order to eliminate such a failure in a reservation for recording caused by a change in the length of a program, for example, Japanese Patent Application Laid-Open (JP-A) No. 9-322105 discloses a technique in which information regarding the length of a program is separately transmitted other than a video signal and a voice signal of a program, and in a reception side, a change of the time of reserved recording is performed, utilizing program broadcasting time information. However, in this technique, since a special code such as the program broadcasting time information other than an actual program has to be transmitted from a transmission side and the special code has to be decoded in a reception side, this technique has not been applied to a general broadcast.

Therefore, in order to eliminate a failure in reserved recording without transmitting and receiving the special code described above, for example, it is desired to provide in a device of a reception side a function by which a broadcast content or a category of a program is automatically classified using a video signal and/or a voice signal broadcasted and recording is controlled based on the broadcast content or the category of the program classified.

For example, there is conventionally a technique, as a technique for automatically classifying a broadcast content, by which a CM (a commercial) during a program is detected and is automatically skipped. That is, for example, Japanese Patent Application Laid-Open (JP-A) No. 3-158086 and Japanese Patent Application Laid-Open (JP-A) No. 3-262287 disclose a technique in which whether the present broadcast content is a CM or a program is determined, while utilizing a phenomenon in which broadcast modes of a CM and a broadcast program in television broadcasting are different (e.g., stereo, bilingual, monaural, or the like), by detecting a change in such broadcast modes, so that only CMs are automatically skipped based on the result of the determination. Further, for example, Japanese Patent Application Laid-Open (JP-A) No. 8-317342 discloses a technique in which whether the present broadcast content is a CM or a program is determined, while utilizing a phenomenon in which there are a black level of a video signal and a silent interval of a voice signal between a CM and a program in television broadcasting, by detecting a change between a black level and a white level of a video signal and a silent interval of a voice signal, so that only a CM is automatically skipped based on the result of the determination. However, these techniques are specialized in skipping a CM and does not enable discrimination of a category of a program.

Moreover, conventionally, as a technique to automatically classifying a category of a program, Japanese Patent Application Laid-Open (JP-A) No. 10-187182 discloses a technique in which a voice signal is sorted into voice, music, and acoustic sections, and after entire voice signal is inputted, an occurrence pattern of the voice, music, and acoustic sections is sought so as to categorically classify video information of a program based on the occurrence pattern. However, in this technique, since the occurrence pattern is sought after entire voice signal is inputted, a signal arriving as a tune series cannot be causally, categorically classified in real time, and thus this technique cannot be employed for controlling picture recording or sound recording regarding a program. Further, in this technique, since a voice signal is deterministically classified into the three kinds, the music, the voice, and the acoustic, for example, when an engine sound of an automobile or the like, that is an acoustic sound, is erroneously detected as music, such error cannot be corrected no longer in processing in a latter part, and thus classifying programs which include many categories into each category is extremely difficult. Furthermore, in this technique, only a voice signal is employed, and useful information, for example, that a video signal has in television broadcasting, is not utilized.

BRIEF SUMMARY OF THE INVENTION

The present invention was developed concerning the above described circumstances, and it is an object of the present invention to provide a device and a method of signal processing by which, for example, reserved recording can be controlled in a recorder, a failure in reserved recording can be eliminated, and further, automatic filtering for a program to be recorded, automatic skipping for a CM, and automatic editing for programs are possible by correctly and surely sorting and classifying contents of various programs and categories.

The above described problem is solved through a signal processing device of the present invention comprising a hierarchical framing means for framing a signal in a plurality of hierarchical distinct time sections, a processing means for processing signals in each hierarchical frame for each hierarchy, and a category determining means for determining the category of the signal based on the result of the processing.

The above described problem is solved through a signal processing method of the present invention comprising the steps of: framing a signal in a plurality of hierarchical distinct time sections, processing signals in each hierarchical frame for each hierarchy, and determining the category of the signal based on the result of the processing.

As it will be clear from explanations, in the device and method of signal processing of the present invention, by framing a signal in a plurality of hierarchical distinct time sections, processing signals in each hierarchical frame for each hierarchy, and determining the category of the signal based on the result of the processing, for example, contents or categories of broadcast programs of various kinds can be correctly and surely sorted and classified, and thus, for example, reserved recording in a recorder can be controlled, and not only a failure in reserved recording can be eliminated but also automatic filtering for a program to be recorded, automatic skipping for a CM, automatic editing for programs, and the like are possible.

BRIEF DESCRIPTION OF THE SEVERAL VIEWS OF THE DRAWING

Fig. 1 is a block circuit diagram showing an example of an outlined constitution of a program category automatic classification device as an embodiment to which the device and the method of signal processing of the present invention are applied;

Fig. 2 is a view employed for explaining a time relationship of processing in each processing part of the program category automatic classification device of the feature of the present embodiment;

Fig. 3 is a view showing a correspondence table among processing in a short time signal processing part of the program category automatic classification device of the feature of the present embodiment, each feature amount, and dimensions;

Fig. 4 is a view showing a correspondence table between kinds of elements of classifying vectors outputted from an intermediate time signal processing part and vector elements in the program category automatic classification device of the feature of the present embodiment;

Fig. 5 is a view showing a correspondence table between feature amounts and processing methods in a feature extraction part of a long time signal processing part of the program category automatic classification device of the feature of the present embodiment;

Fig. 6 is a view showing an example of a rule table prepared in a rule table part of the long time signal processing part ofthe program category automatic classification device of the feature of the present embodiment;

Fig. 7 is a view employed for explaining a concrete operational example (the former frame part in two frames) at the long time signal processing part of the program category automatic classification device of the feature of the present embodiment;

Fig. 8 is a view employed for explaining a concrete operational example (the latter frame part in two frames) at the long time signal processing part of the program category automatic classification device of the feature of the present embodiment;

Fig. 9 is a block circuit diagram showing an outlined constitution of a recorder provided with a reserved recording function of a program to which the program category automatic classification device of the feature of the present embodiment is applied;

Fig. 10 is an operational flow chart at the time of unrecording operation state in a picture and sound recording controller of the recorder to which the program category automatic classification device of the feature of the present embodiment is applied;

Fig. 11 is an operational flow chart at the time of recording operation state in the picture and sound recording controller of the recorder to which the program category automatic classification device of the feature of the present embodiment is applied;

Fig. 12 is a view employed for explaining actual operations of the recorder to which the program category automatic classification device of the feature of the present embodiment is applied;

Fig. 13 is a block circuit diagram showing an outlined constitution of a program automatic filtering device to which the program category automatic classification device of the feature of the present embodiment is applied;

Fig. 14 is an operational flow chart at the time of control for allowing viewing of a program of a viewing allowance program category in the program automatic filtering device to which the program category automatic classification device of the feature of the present embodiment is applied;

Fig. 15 is an operational flow chart at the time of control for disallowing viewing of a program of a viewing disallowance program category in the program automatic filtering device to which the program category automatic classification device of the feature of the present embodiment is applied;

Fig. 16 is an operational flow chart at the time of control for disallowing viewing of a program of a viewing disallowance program category and for allowing viewing of a program of a viewing allowance program category in the program automatic filtering device to which the program category automatic classification device of the feature of the present embodiment is applied;

Fig. 17 is a block circuit diagram showing an outlined constitution of an automatic program editing device to which the program category automatic classification device of the feature of the present embodiment is applied;

Fig. 18 is a view showing one example of editorial information stored in an editorial information storing part of the automatic program editing device to which the program category automatic classification device of the feature of the present embodiment is applied;

Fig. 19 is a view employed for explaining an example of concrete operations of the automatic program editing device to which the program category automatic classification device of the feature of the present embodiment is applied; and

Fig. 20 is an operational flow chart of a playback editorial control by a playback control part of the automatic program editing device to which the program category automatic classification device of the feature of the present embodiment is applied.

## DETAILED DESCRIPTION OF THE INVENTION

A preferred embodiment of the present invention will be explained referring to drawings.

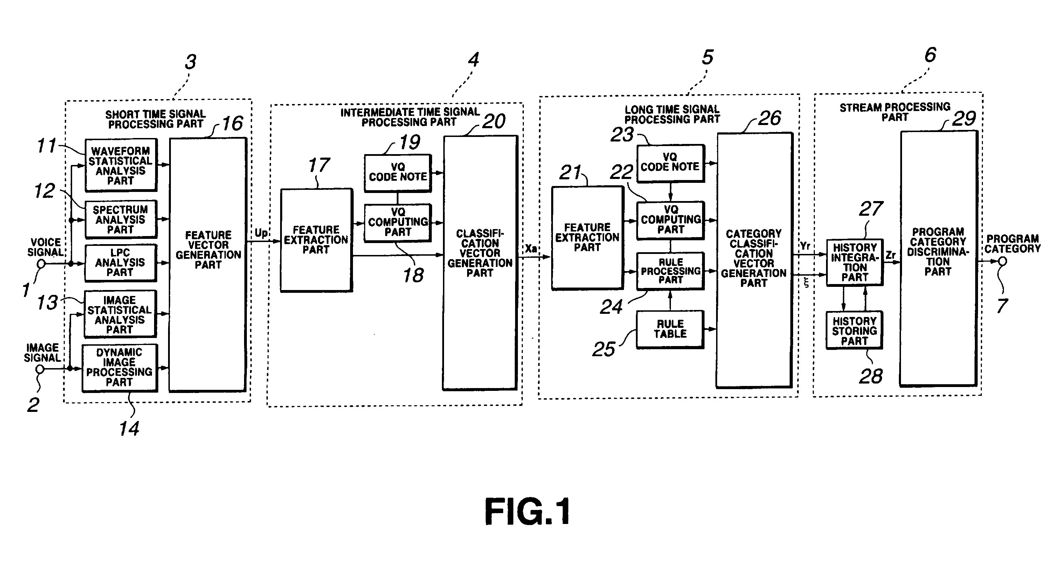

Fig. 1 shows an example of an outlined constitution of a program category automatic classification device as an embodiment to which the device and the method of signal processing of the present invention are applied.

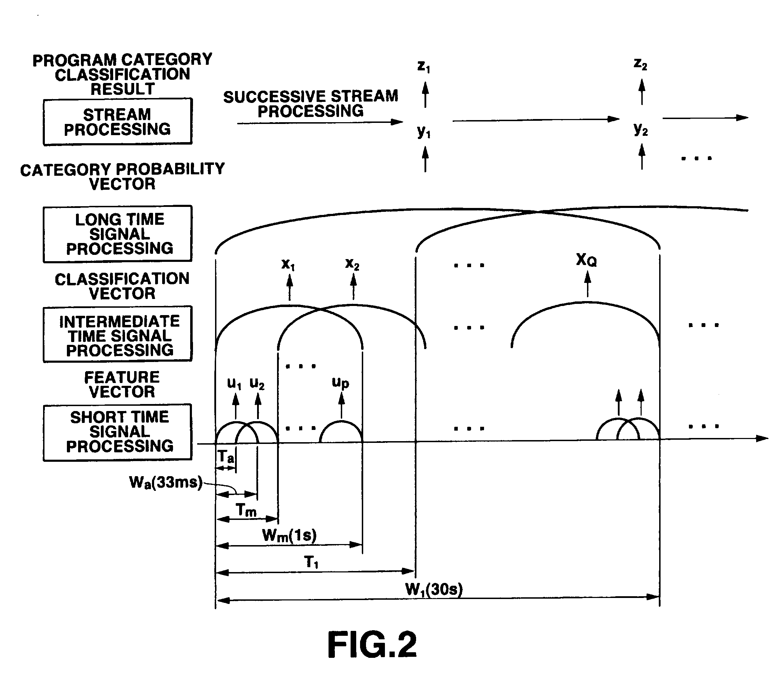

The program category automatic classification device according to the embodiment of the present invention shown in Fig. 1 is largely divided into four processing parts 3-6, and each processing part 3-6 hierarchically processes for each distinct time scale. A time relationship at each processing part 3-6 of Fig. 1 is shown in Fig. 2.

That is, an outline of processing at each processing part 3-6 of the program category automatic classification device of the feature of the present embodiment is as follows.

First, at a short time signal processing part 3 a voice signal supplied from a voice input terminal 1 and a video signal supplied from an image input terminal 2 are divided into signal pieces of short time, for example, of several ten milliseconds (hereafter, referred to as a short time frame), and a feature amount extraction is performed through signals of each short time frame. Information regarding the feature amounts extracted for each short time frame at the short time signal processing part 3 is sent to an intermediate time signal processing part 4.

At the intermediate time signal processing part 4 information regarding feature amounts extracted for each short time frame is arranged for each intermediate time, for example, of a unit of several seconds (hereafter, referred to as an intermediate time frame), classification of a sound source (voice, music, and the like), discrimination of a scene change (in the case in which there is an image), and the like are performed through the feature amounts of each intermediate time frame. Sound source classification information and scene change discrimination information of each intermediate time frame obtained by the processing at the intermediate time signal processing part 4 are sent to a long time signal processing part 5.

At the long time signal processing part 5 the sound source classification information and the scene change discrimination information obtained at the intermediate time signal processing part 4 are arranged for each long time, for example, of several ten seconds unit (hereafter, referred to as a long time frame), and classifying a program category is performed through information of each long time frame. Program category classification information obtained by the long time signal processing part 5 is sent to a stream processing part 6.

Here, in the signal processing of the long time frame of the several ten seconds unit at the long time signal processing part 5, there is a possibility that a result which is not necessarily matched with an entire program as in a case, for example, of a sports scene during news, is outputted. Thus, at the stream processing part 6 the program category information of each long time frame obtained by the long time signal processing part 5 is integrated with past history one by one, and conformity of an entire program for an inserted part or an erroneous classification is ensured.

Below, giving a case as an example in which a video signal and a voice signal by television broadcasting are supplied to the image input terminal 2 and the voice input terminal 1, signal processing at each processing part 3-6 of the program category automatic classification device of the present embodiment shown in Fig. 1 will be explained in detail. Although television broadcasting is exemplified here, only a voice signal is employed so as to perform classification of program categories in the case of radio broadcasting.

At the short time signal processing part 3 a voice signal and a video signal are divided for each short time frame, for example, of approximately several ten milliseconds, feature extraction is performed through the voice signal and the video signal of each short time frame, respectively. The time length of this short time frame is similar to a frame time employed for a general speech recognition, a compression, or the like, and in the present embodiment, a short tune frame length $W_s$ is supposed to, for example, be about 33 milliseconds and a short time frame period $T_s$ for performing short time framing is supposed to be $W_s/2 (\fallingdotseq 17$ millisesonds). For example, a reference, L. R. Rabiner and R. W. Schafer: "Digital Signal Processing of Speech Signals," Prentice-Hall, NJ (1978) describes regarding a frame time employed for a general speech recognition, a compression, or the like.

First, at the short time signal processing part 3, when a voice signal and a video signal are inputted, for example, as analog signals, the analog signals are digital signaled by an A/D (analog/digital) converting part that is not shown.

Next, at the short time signal processing part 3 feature amounts are sought for respective times of the short time frame length $W_s$ by dividing the digital voice signal and the digital video signal for each short time frame in question as described below, and further $N_8$ dimension feature vector $u_p$ is generated from the feature amounts and is outputted. The p (p=1, 2, 3, ..., P) is an index showing the short time frame and corresponds to the time in which the short time frame period $T_s$ is taken as a unit.

Giving a more concrete example, the short time signal processing part 3 is provided with a waveform statistical analysis part 11, a spectrum analysis part 12, and an LPC analysis (liner prediction analysis) part 13 as a constitution for seeking effective feature amounts in order to represent a character of a sound source from a voice signal and seeks the feature amounts showing a character of the sound source by employing a waveform statistical analysis by the waveform statistical analysis part 11, a spectrum analysis by the spectrum analysis part 12, and an LPC analysis by the LPC analysis part 13.

At the waveform statistical analysis part 11 a mean power of the voice signal in the short time frame is sought as one of feature amounts showing a character of the sound source. That is, since there are characters wherein a mean power is relatively constant in music or part of environmental sound (e.g., an automobile sound, a machine sound, or the like), part of music (e.g., sound of a percussion instrument and the like) has a damping property, and unevenness becomes greater in voice or part of environmental sound (e.g., hand clapping, a cheer, and the like), a mean power of a voice signal in the short time frame may become an effective feature amount for sound source classification.

At the spectrum analysis part 12 the voice signal in the short time frame is spectrum analyzed, and the center of gravity of spectral envelope for each short time frame in question, a second moment, and a harmonic structural degree are sought as one of the feature amounts showing a character of the sound source. That is, the center of gravity of spectral envelope in the short time frame and the second moment are statistical amounts representing an outline of a spectrum, and, for example, generally, music more frequently has a wide bandwidth in voice and music. Thus, there are many occasions in which there are characteristics in the shape and the expansion of a spectrum depending on a sound source. Therefore, the center of gravity and the second moment are feature amounts effective in classifying a sound source. The harmonic structural degree is an amount for evaluating an integer times relationship at a maximal position of a spectrum, a harmonic structural degree is sought by the following procedure, for example, employing a histogram method at the spectrum analysis part 12.

First, as first processing, a maximal frequency of a significant component of a spectrum in the short time frame is sought by a differentiation or the like. Then, as second processing, a histogram regarding the maximal frequency and the frequency of 1/an integer is created. Next, as third processing, the maximum value of the histogram is division standardized by the number of the maximal value so as to give a first harmonic structural degree. As fourth processing, the maximum frequency of the histogram is supposed to be a first pitch frequency. As fifth processing, the component of integer times of the first pitch frequency are all removed, and a histogram is created again by the second processing. After that, as sixth processing the maximum value of the histogram is standardized by the number of the maximal value by the third processing to give a second harmonic structural degree. As seventh processing, the maximum frequency of the histogram is supposed to be a second pitch frequency. Through the processing described above, the one many of whose constitutional components make a harmonic structure, such as a single voice or a simple musical note, becomes significant only in its first harmonic structural degree. On the other hand, in the case in which sound with harmonic structures is plurally superposed, such as multiple voices or a chord, both first and the second harmonic structural degree have significant values. In the case in which ones that do not have a harmonic structure, such as a noise, all their harmonic structural degrees become small. With this, this feature amount becomes one effective in classifying a sound source and classifying a mixed sound. A reference, T. W. Parson: "Separation of Speech from Interfering Speech by means of Harmonic Selection," J. Acoust. Soc. Am., 60, 4, 911/918 (1976) is described with respect to a histogram method.

At the LPC analysis part 13, the pitch frequency obtained employing a short time correlation relative to an LPC coefficient, an LPC residuals energy, and LPC residuals is sought as one of feature amounts representing a character of the sound source. With respect to this, the aforementioned reference, L. R. Rabiner and R. W. Schafer: "Digital Signal Processing of Speech Signals," Prentice-Hall, NJ (1978) is described. The short time correlations relative to the LPC coefficient, the LPC residuals energy, and the LPC residuals by these LPC analyses are feature amounts well describing voice or music and are effective in classifying a sound source. With respect to this, Satoshi Kawachi, Shoji Kajita, Kazuya Takeda, and Fumitada Itakura: "Automatic Classification of Broadcasting Sound based on VQ Distortion," Technical Report of IEICE, DSP97-95/SP97-50, 43/48 (1997) and Yuuji Maeda: "Automatic Speech/music Classification Algorithm," Technical Report of IEICE, CQ98-61, 9/13 (1998) are described.

Although a voice signal is short time framed in each wavefonn statistical analysis part 11, the spectrum analysis part 12, and the LPC analysis part 13 so as to perform the analyses described above, respectively, in the example of Fig. 1, a framing means for short time framing a voice signal may be provided in former parts of each analysis part 11-13 so that the voice signal which is short time framed in the framing means is sent to each analysis part 11-13.

The short time signal processing part 3 is provided with an image statistical analysis part 14 and a dynamic image processing part 15 as a constitution for obtaining the feature amounts of the video signal of each short tune frame so that the feature amounts are obtained representing a character of an image, employing an image statistical analysis by the image statistical analysis part 14 and a dynamic image processing of the dynamic image processing part 15.

In the image statistical analysis part 14, a mean and a variance of an intensity of one frame image are sought as ones of the feature amounts of the image. These mean and variance of the intensity are effective in detecting black level images which often appear at the time of program changing and in characterizing images which have many parts with the same colors (set-solid part), such as a cartoon film. One frame image, here, means the image of one frame time of 1/30 seconds. In other words, the short time frame length $W_s$ in the short time signal processing part 3 is set corresponding to one frame time (1/30 seconds $\fallingdotseq$ 33 milliseconds) of the video signal.

At the dynamic image processing part 15, image difference part energies between frames are sought as ones of feature amounts of the image. The image difference part energies between frames become feature amounts effective in characterizing scene switching or the like.

Each feature amount regarding the voice signal obtained from the waveform statistical analysis part 11, the spectrum analysis part 12, and the LPC analysis part 13 described above and each feature amount regarding the video signal obtained from the image statistical analysis part 14 and the dynamic image processing part 15 are sent to a feature vector generation part 16. At the feature vector generation part 16, a feature vector $u_p$ of $N_s$ dimensions for each short time frame is sought from each feature amount for each short time frame and is outputted. This feature vector $u_p$ is sent to the intermediate time signal processing part 4.

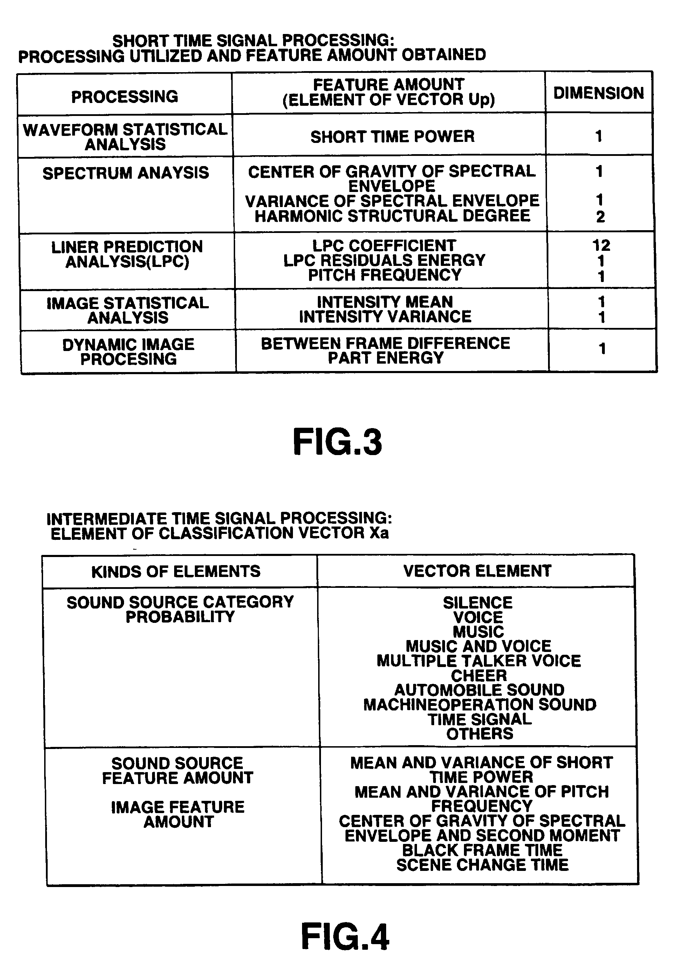

Fig. 3 shows a correspondence table among the processing in each analysis part 11-14 and the processing part 15 in the short time signal processing part 3, each feature amount (each component of the feature vector $u_p$) obtained by these analyses and processing, and dimensions. That is, this correspondence table shown in Fig. 3 shows that a mean power (primary) of the short time frame as a feature amount is obtained in the waveform statistical analysis processing, the center of gravity (primary) and variance (primary) of spectral envelope and the harmonic structural degree (secondary) are obtained as the feature amounts in the spectrum analysis processing, the LPC coefficient (primary or secondary), the LPC residuals energy (primary), and the pitch frequency (primary) are obtained in the liner prediction analysis (LPC analysis), the mean of the intensity (primary) and the variance of the intensity (primary) are obtained as the feature amounts in the image statistical analysis, and difference part energies between frames (primary) is obtained as the feature amounts in the dynamic image processing.

Next, in the intermediate time signal processing part 4, the feature vectors $u_p$ for each short time frame supplied from the short time signal processing part 3 are arranged for each intermediate time frame of the several seconds unit, and a classification of the sound source and a discrimination of a scene change or the like are performed through the feature vectors $u_p$ of each intermediate time frame. Here, the length of the intermediate time frame is made an necessary and sufficient time length for classifying into categories corresponding to particularly sound source, such as voice/music/multiple voices of the voice signal framed. In the present embodiment, an intermediate time frame length $W_m$ is made, for example, about 1 second, and an intermediate time frame period $T_m$ for performing the intermediate tune framing is made $W_m/2$. The phenomena in which a similar time length is effective for classifying a sound source is described in the aforementioned references, Satoshi Kawachi, Shoji Kajita, Kazuya Takeda, and Fumitada Itakura: "Automatic Classification of Broadcasting Sound based on VQ Distortion," Technical Report of IEICE, DSP97-95/SP97-50, 43/48 (1997), Yuuji Maeda: "Automatic Speech/music Classification Algorithm," Technical Report of IEICE, CQ98-61, 9/13 (1998), and Satoshi Kawachi, Shoji Kajita, Kazuya Takeda, and Fumitada Itakura: "Classification of Broadcasting Sound using Vector Quantization," Proceedings of the Autumn Meeting of the Acoustical Society of Japan, Fall, 173/174 (1997), and the like. As categories for classifying the sound source, categories, such as silence, voice, music, music and voice, multiple talker voice, environmental sound (e.g., an automobile sound, a machine operation sound, a cheer, and the like) and a composite tone (a time signal and the like), and others (sounds which cannot be explicitly given a categorical name), are considered.

The input to the intermediate tune signal processing part 4 is the feature vector $u_p$ (p=1, 2, ..., P) supplied from the short time signal processing part 3 for each short time frame period $T_s$ ( $\fallingdotseq$ 17 milliseconds), and P (=$W_m/T_s$) of these feature vectors $u_p$ are given for the range of the intermediate time frame length $W_m$ ( $\fallingdotseq$ 1 second). The outputs from the intermediate time signal processing part 4 correspond to a vector $x_q$ (q=1, 2, ..., Q) which represents a sound source category of a voice signal by a probability, a mean and a variance of power of the short time frame, a mean and a variance of the pitch frequency, a mean and a variance of a spectral envelope, whether or not a black frame exists and the time of day of the black frame, and whether or not a scene change exists and the time of day of the scene change, as described later.

P of the feature vectors $u_p$ from the short time signal processing part 3 are inputted to a feature extraction part 17 of the intermediate time signal processing part 4. In the feature extraction part 17, in order to obtain an average-like character and a character of changing regarding particularly a voice signal in P of the feature vectors $u_p$, a mean and a variance for each vector element are sought so as to give a new vector $u_a$. Each element of this vector $u_a$ corresponds to a feature amount well reflecting a character of a sound source. In the present embodiment, for example, the pattern classification is performed employing a vector quantization method (VQ). With respect to the vector quantization method, the aforementioned reference, Satoshi Kawachi, Shoji Kajita, Kazuya Takeda, and Fumitada Itakura: "Automatic Classification of Broadcasting Sound based on VQ Distortion," Technical Report of IEICE, DSP97-95/SP97-50, 43/48 (1997), and a reference, A. Gersho and V. Cupennan: "Vector Quantization: A pattern-matching technique for speech coding, "IEEE Communication Magazine, December, 15/21 (1983), are described. Realization may be possible, for example, even by a neural network or other statistical discrimination methods if it is similar to the vector quantization method. The extraction time signal processing part 4 is provided with a VQ computing part 18 and a VQ code note 19 as a constitution for performing the vector quantization.

The VQ code note 19 is created by preparing in advance a large number of known samples, and, for example, J of vectors $r_{ij}$ representing each category i (i=1, 2, ..., I) are decided by a so-called leaning method. In this case, although a so-called leaning with an educator is employed for the sound to which a sound source name is explicitly given (e.g., voice, an automobile, or the like), regarding noises, environmental sounds, and the like to which giving a category explicitly is difficult, category classification is performed employing leaning without an educator so as to give names, for example, another 1, another 2, ..., or the like, for categories created as a result. The vector quantization is performed by comparing the feature vector $u_a$ with a representative vector of the VQ code note 19 mentioned above at the VQ computing part 18 and by choosing a vector which is in the minimum distance from J of the representative vectors regarding the entire categories. When the inverse number $\rho_i$ of the distance is supposed to be an adaptation for each category, the adaptation $\rho_i$ can be expressed by the following expression (1).

$$\rho_i = 1/\min_j \left( \left| r_{ij} - u_a \right|^2 \right) \qquad (1)$$

In the VQ computing part 18, this is standardized by the sum of $\rho_i$ through computation of the following expression (2) so as to obtain an output vector $v_i$. This vector $v_i$ becomes a probability vector expressing how much a given sound is adapted to each sound source category.

$$v_i = \rho_i / \sum_{j=1}^{I} \rho_i \qquad \cdots (2)$$

A sound source category probability vector $v_i$ obtained by the VQ computing part 18 is sent to a classification vector generation part 20.

Other than the probability vector of the sound source category obtained in the vector quantization, in the feature extraction part 17, as the feature amounts necessary in a latter part, sought are a mean and a variance of power of the short time frame, a mean and a variance of the pitch frequency, a mean and a variance of a spectral envelope, whether or not a black frame exists, the time of day of the black frame when there exist a black frame, whether or not a scene change exists, and the time of day of the scene change when there exist a scene change. Whether or not a black frame exists can be sought by, for example, comparing an image intensity mean with a predetermined threshold value, and whether or not a scene change exists can be sought by, for example, comparing an image difference part energy with a predetermined threshold value. These feature amounts necessary in a latter part are sent to the classification vector generation part 20.

In the classification vector generation part 20, the probability vector from the VQ computing part 18 and the feature amounts necessary in the latter part from the feature extraction part 17 are put together so as to generate the vector $x_q$ (classification vector) that is outputted. This classification vector $x_q$ is sent from the intermediate time signal processing part 4 to the long time signal processing part 5.

Fig. 4 shows a correspondence table between the kinds of elements of classification vectors $x_q$ outputted from the long time signal processing part 5 and the vector elements. That is, according to this correspondence table shown in Fig. 4, there are silence, voice, music, music and voice, multiple talker voice, a cheer, an automobile sound, a machine operation sound, a time signal, and others in the vector element relative to a sound source category probability, there are a mean and a variance of a short time power and a mean and a variance of a pitch frequency in the vector element relative to an acoustic feature amount, and there are a black frame time of day and a scene change time of day in the vector element relative to an image feature amount.

Next, in the long time signal processing part 5, the classification vectors $x_q$ for each intennediate time supplied from the intennediate time signal processing part 4 are arranged for each long time frame of the several ten seconds unit, and a classification of a program category is performed through the classification vectors $x_q$ of each long time frame. In the present embodiment, the tune length $W_1$ of a long time frame is made, for example, about 30 seconds, and a short time frame period $T_m$ for performing a long tune framing is made $W_1/2$ ( $\fallingdotseq 15$ seconds).

The input to the long tune signal processing part 5 is the classification vector $x_q$ (q=1, 2, ..., Q) supplied from the intermediate time signal processing part 4 for each intermediate time frame, and Q (=$W_1/T_m$) of these classification vectors $x_q$ are given for the range of the long time frame length $W_1$ ( $\fallingdotseq 30$ seconds). The output from the long time signal processing part 5 corresponds to a probability vector (category classification vector) $y_r$ which represents a program category regarding the present frame r by a probability as described later. As categories of programs, for example, a news program, a music program, a sports program, a variety show program, a drama program, other programs, a CM, a program's changing point (border) can be considered.

In classification processing of the program category at the long time signal processing part 5, a statistical category discrimination method and a rule table reference method are both employed. This is because obvious tendencies on the characters of programs (tendencies, such as, e.g., there is a large amount of voice of a single talker in a news program, e.g., a video signal level is definitely greatly changed in a border of programs, e.g., regarding CMs there is a border in integer times of 15 seconds wherein a voice signal level and/or a video signal level are greatly changed) are suitable for being described as rules while statistical tendencies of signals that a human is not usually conscious of are suitable for being classified by the statistical discrimination method. Integration of both can be realized by expressing the program categories by probabilities.

The classification vector $x_q$ from the intermediate time signal processing part 4 is sent to a feature extraction part 21 of the long time signal processing part 5. In the feature extraction part 21, part of probability vectors expressing the sound source categories (part of the sound source category probabilities shown in the correspondence table of Fig. 4) only is taken out from the classification vectors $x_q$ so as to give new vectors $x_a$, and the vectors $x_a$ are inputted to a VQ computing part 22. That is, in the long time signal processing part 5, the vector quantization is utilized again for the statistical discrimination method, and thus the extraction time signal processing part 4 is provided with the VQ computing part 22 and a VQ code note 23 as a constitution for performing the vector quantization.

The VQ code note 23 is created by preparing in advance a large number of known samples, and, for example, vectors $c_{ij}$ representing each program category $z_i$ are decided by the so-called leaning method. Here, i (i = 1, 2, ..., I; the I is a category number) is an index representing the classification category, and j (j = 1, 2, ..., J) is an index for distinguishing a plurality of representative vectors expressing the classification category.

In the VQ computing part 22, the distance between the vector $x_a$ and the representative vector $c_{ij}$ is computed so as to choose the one with a minimum distance from a plurality of vectors expressing each category. Further, in the VQ computing part 22, the inverse number $\eta_{qi}$ of the distance is sought, employing an expression (3), and this inverse number $\eta_{qi}$ is supposed to be an adaptation for each category in the intermediate time frame q.

$$\eta_{qi} = 1/\min_j \left( \left| c_{ij} - x_a \right|^2 \right) \tag{3}$$

In the VQ computing part 22, this is computed regarding all vectors $x_a$ (a = 1, 2,..., Q) in one frame by the computation of the following expression (4) and is added for each distinct category.

$$D_i = \sum_{q=1}^{Q} \eta_{qi} \qquad \cdots \ (4)$$

Further, in the VQ computing part 22, this is standardized by the sum of $D_i$ through the computation of the following expression (5) so as to obtain an output vector $y_i$. This vector $y_i$ becomes a probability vector expressing how much a signal is adapted to each program category in the long time frame.

$$y_i = D_i / \sum_{i=1}^{I} D_i \qquad \cdots \ (5)$$

The program category probability vector $y_i$ obtained by the VQ computing part 22 is sent to a rule processing part 24.

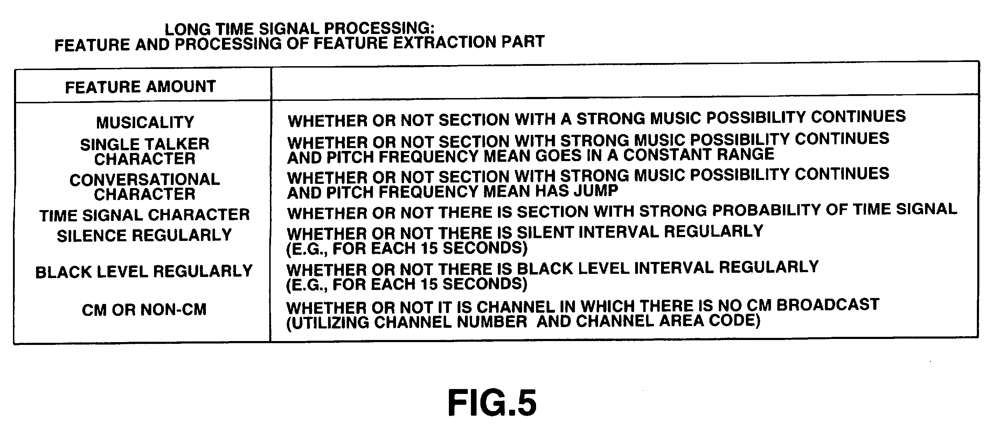

The feature extraction part 21 of the long time signal processing part 5 discriminates whether or not there is a character by threshold processing as a correspondence table between feature amounts and processing methods as shown in Fig. 5 from the feature amounts of the classification vector $x_q$ and inputs to the rule processing part 24. That is, according to the correspondence table shown in Fig. 5, whether or not a section with a strong possibility of being music continues is discriminated as a processing method for a feature amount of musicality, whether or not a section with a strong possibility of being voice continuously goes in a range in which a mean of a pitch frequency is constant is discriminated as a processing method for a feature amount of the character of a single talker, whether or not there are continuously jumps in the mean of a pitch frequency in a section with a strong possibility of being voice is discriminated as a processing method for a feature amount of the character of conversation, whether or not there are a section with a strong possibility of being a time signal is discriminated as a processing method for a feature amount of the character of time signal, whether or not there are silent intervals regularly (e.g., for each 15 seconds) is discriminated as a processing method for a feature amount of the character of silent regularity, whether or not there are black level intervals regularly (e.g., for each 15 seconds) is discriminated as a processing method for a feature amount of a black level regularity, whether or not a channel is the one in which there is no CM (utilizing a channel number and a channel area code) is discriminated as a processing method for a feature amount as to whether or not there is a CM.

In the rule processing part 24 of the long time signal processing part 5, the program category probability vector $y_i$ supplied from the VQ computing part 22 in accordance with the rule of the rule table stored in a rule table part 25 is operated, while obtaining the information as to whether or not there is a character obtained by the discrimination method shown in the correspondence table of Fig. 5 at the feature extraction part 21.

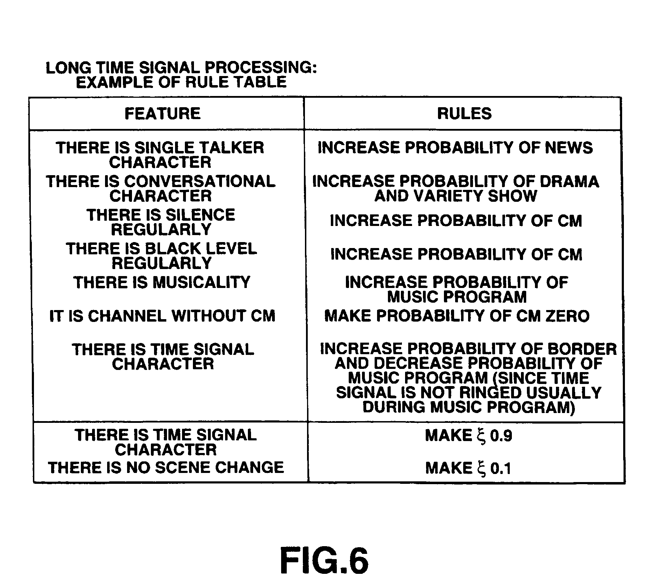

That is, in the rule table part 25, the rule table showing the correspondence between whether there is a character as shown in Fig. 6 in advance and an operational rule of a probability is prepared, and in the rule processing part 24, the program category probability vector $y_i$ is operated so as to increase or decrease the program category probability vector $y_i$, employing the rule table shown in Fig. 6. Explaining concretely, based on the rule table shown in Fig. 6, the rule processing part 24 increases the probability of a news program when there is the character of a single talker, increases the probability of a drama or variety show program when there is a character of conversation, increases the probability of a CM when there is a silent regularity, increases the probability of a CM when there is a black level regularity, increases the probability of a music program when there is a musicality, makes the probability of a CM zero in the case of the channel which does not have a CM, increases the probability of a border of programs when there is a character of a tune signal and decrease the probability of a music program (since usually no time signal is rung in a music program), makes a history update coefficient $\xi$ described later at about 0.9 when there is a character of a time signal, and makes the history update coefficient $\xi$ at about 0.1 when there is no scene change. Since the operation of the program category probability vector $y_i$ in the rule processing part 24 is performed by the increase or the decrease of the probability, not only a definite rule but also a vague tendency can be described by arbitrarily deciding the magnitude as a parameter.

After referring to all rules at the rule processing part 24 as described above, a category classification vector generation part 26 outputs the probability vector (program category classification vector) $y_r = (y_1, y_2, ..., y_1)$ (r=1, 2, ...) and the history update coefficient $\xi$ described later. The r is an index representing the long time frame and corresponds to the time in which the long time frame period $T_l$ (up to 15 seconds) is supposed to be a unit.

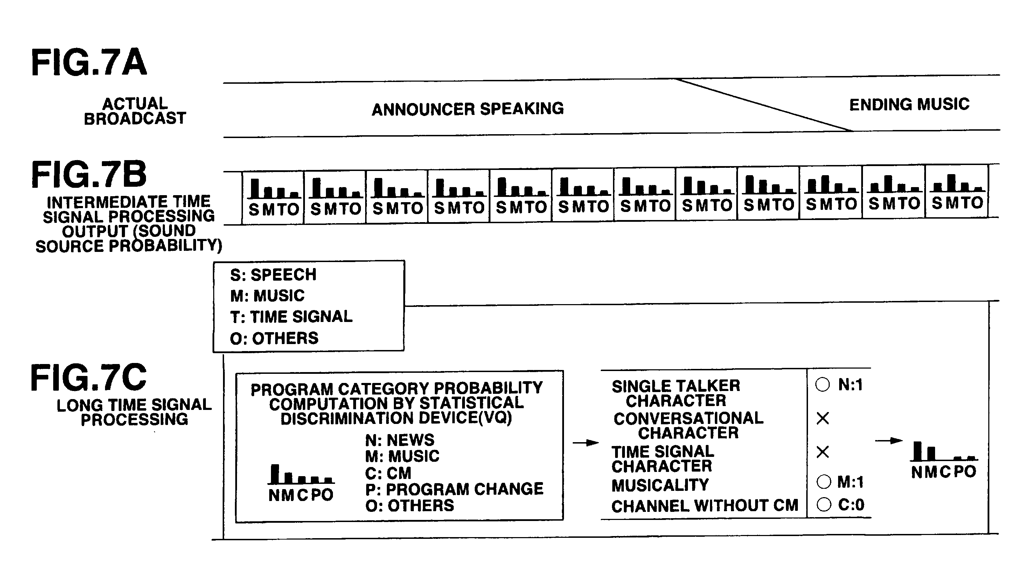

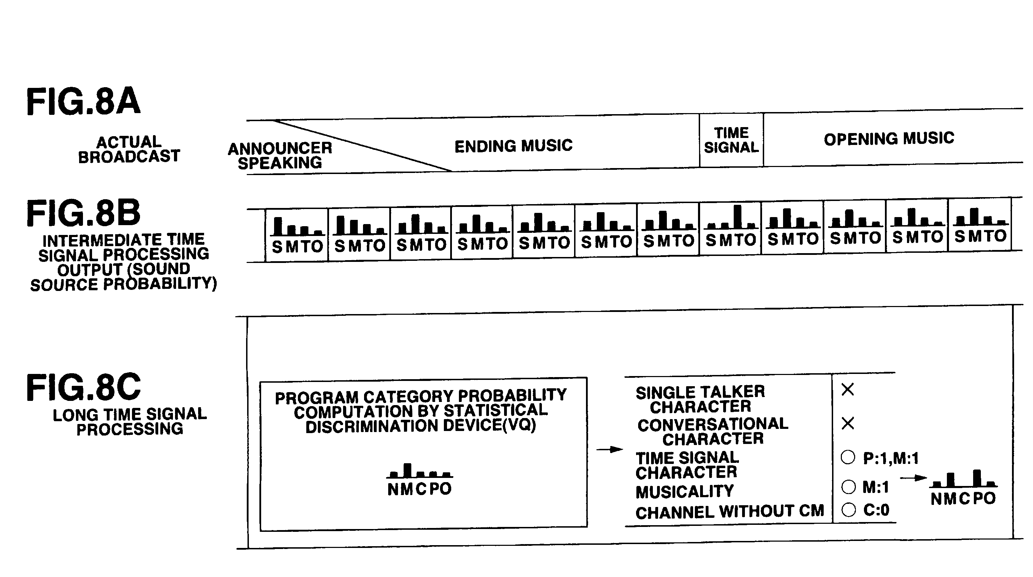

Below, employing Fig. 7 and Fig. 8, a concrete operational example in the long time signal processing part 5 will be explained. In the example of Fig. 7 and Fig. 8, shown is an operational example of the long time signal processing part 5 during the time from the ending of a news program of a channel which does not have a CM to the beginning of the next program. Although Fig.7 and Fig. 8 are divided into two drawings on account of space, these Fig. 7 and Fig. 8 show a successive two frames (partly overlapping) part. In Fig. 7 and Fig. 8, each (a) shows actual broadcast content, each (b) shows processing results (probability of the sound source) in the intermediate time signal processing part 4, and each (c) shows processing operations (classification of the program category) in the long time signal processing part 5. In each (b) in the drawings showing the processing results in the intermediate time signal processing part 4, the height of a bar shown by S shows the strength of probability of being voice, the height of a bar shown by M shows the strength of probability of being music, the height of a bar shown by T shows the strength of probability of being a time signal, and the height of a bar shown by O shows the strength of probability of being others. Further, in each (c) in the drawings showing the processing results in the long time signal processing part 5, the height of a bar shown by N shows the strength of probability of being a news program, the height of a bar shown by M shows the strength of probability of being a music program, the height of a bar shown by C shows the strength of probability of being a CM, the height of a bar shown by P shows the strength of probability of being a border, and the height of a bar shown by O shows the strength of probability of being others.

First, Fig. 7 will be explained. In this Fig. 7, an actual broadcast content in (a) contains a content in which a state in which an announcer is speaking passes and an ending music gradually fades in. In the case with the broadcast content like this, with respect to the probability of a sound source in the intermediate time signal processing part 4 of (b) in the drawing, while the announcer is speaking, the probability of voice (S) is the highest, and as the ending music fades in, the probability of music (M) becomes high. In the case with the present broadcast content, in the long time signal processing part 5, the probability of a sound source by the intermediate time signal processing part 4 as described above is inputted, and a program category is classified by performing a vector quantization. With respect to the probability of a program category by the long time signal processing part 5 at this time, the probability of being a news program (N) becomes the highest as shown in the probability graph in a left side of (c) in the drawing. Further, the output of the feature extraction part 21 of the long time signal processing part 5 at this time is operated so as to increase the probability of a news program (N) and a music program (M) (due to the ending music) and decrease the probability of a CM (C) by the rule processing part 24 as shown in the table in a center part of (c) in the drawing. Here, since the sum of the probability is one, the probability of ones which do not receive the operation changes by standardizing after the aforementioned operation. As a result, the result of a program category classification of the long time frame becomes as shown in the probability graph of a right side of (c) in the drawing, expressing a sharp shape for the probability of a news program.

Next, Fig. 8 will be explained. In this Fig. 8, an actual broadcast content in (a) contains a content in which a state in which an announcer is speaking passes, an ending music gradually fades in, and then a time signal enters followed by a beginning of an opening music of the next program. In the case with the broadcast content like this, with respect to the probability of a sound source in the intermediate time signal processing part 4 of (b) in the drawing, the probability of voice (S) is the highest while the announcer is speaking, the probability of music (M) becomes high as the ending music fades in, after that the probability of a time signal (T) becomes the highest while the time signal is rung, and the probability of music (M) becomes high as the opening starts. In the case with the present broadcast content, with respect to the probability of a program category by vector quantization in the long time signal processing part 5, although it may be thought that the probability of being a music program (M) becomes the highest as shown in the probability graph in a left side of (c) in the drawing, since there exist a time signal in this frame, the probability of a music program (M) is decreased and the probability of a program border (P) is increased though there is a musicality by the rule processing in the rule processing part 24 as shown in the table of a center part of (c) in the drawing. As a result, the probability of a music program (M) and the probability of a program border (P) are reversed, and the probability of a program border (P) becomes the highest as shown in the probability graph of a right side of (c) in the drawing.

As described above, in the long time signal processing part 5, prior knowledge can be introduced by employing both a statistical classification processing and a rule processing, thereby making a classification result of a program category further correct.

The program category classification vector $y_r$ outputted from the long time signal processing part 5 operating as described above and the history update coefficient $\xi$ described later are sent to the stream processing part 6.

In the stream processing part 6, a final category classification is performed by integrating the past history for the program category classification vector supplied from the long time signal processing part 5. The processing here are successive stream processing, and thus the stream processing part 6 outputs a program category before and after the present time of day one after another.

Concretely, the program category classification vector $y_r$ and the same dimension internal state vector are prepared in a history storing part 28, and $z_0$ = [constant value] is given as an initial state.

In a history integration part 27, the internal state is updated according to the following expression (6), employing a program category classification vector $y_r$ sought in the r frame by the long time signal processing part 5 and an internal state vector $z_{r-1}$ in the r-1 frame that is one previous, stored in the history storing part 28.

$$z_r = (1-\xi)z_{r-1} + \xi y_r \qquad\qquad (6)$$

Here, $\xi$ ($0 \le \xi \le 1$) in the expression is a history update coefficient, becomes a weight which hardly refers to past history while regarding present information (the result of long time signal processing) as most important when $\xi = 1$, and becomes a weight which regards past history as most important when $\xi = 0$. Time signal information and/or a scene change can be utilized for determining a weight. For example, since there are many occasions in which a program category changes at times of day where exactly every hour starts, setting is made so as to hardly refer to past history ($\xi \fallingdotseq 1$). Further, for example, since a change in program categories is certainly accompanied by a scene change, past history is regarded as most important ($\xi \fallingdotseq 0$) in a section which does not include a scene change. These types of information are obtained from the feature amounts of the long time signal processing, such as a time signal or a scene change. After updating, a vector sought in the r frame is stored in the history storing part 28 as an internal state vector $z_r$.

The stream processing, through the operations described above, can give a robustness to a problem in which an insertion of a different category and/or a category erroneous detection frequently occur and which cannot be cleared only by the long time signal processing of about several ten seconds.

Finally, in the stream processing part 6, an element which gives a maximum value in each element of the vector $z_r$ is chosen according to the so-called maximum posteriori probability method (MAP method) in a program category discrimination part 29 and is outputted as a category classification result at a present time of day. The output from the stream processing part 6 is outputted from an output terminal 7 of the program category automatic classification device of the present embodiment.

Next, the program category automatic classification device of the present embodiment described above can be applied to a recorder provided with a reserved recording function for various programs by, for example, a general television broadcasting, a cable television broadcasting, a satellite broadcasting, a communications satellite broadcasting, a radio broadcasting, or the like.

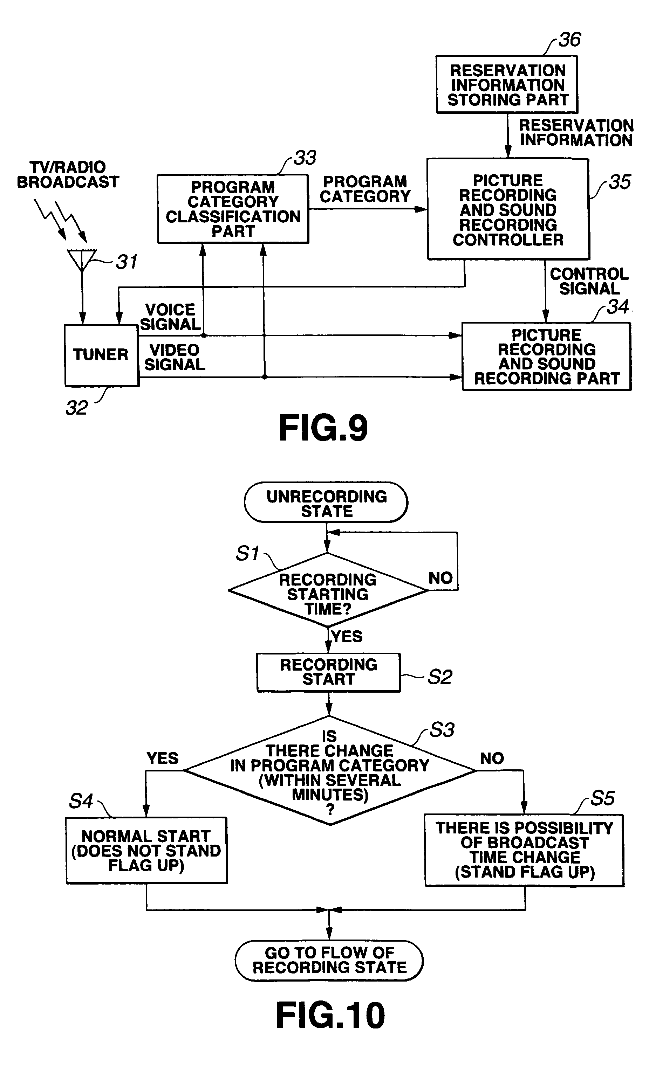

Fig. 9 shows an outlined constitution of a recorder provided with a reserved recording function of a program, for example, of a television broadcasting or a radio broadcasting.

That is, the recorder shown in this Fig. 9, being added the function of the program category automatic classification device of the embodiment of the present invention described above, can automatically classify the category of a program which actually is on the air and can automatically extend a reserved recording starting time or a reserved recording finishing time of a reserved recording or the like based on the result of the classification. Thus, the recorder can set a reserved recording starting time late when a broadcast starting time of a program for which a reservation for recording is made is late than the time of the reservation and can make a reserved recording finishing time extended late when a broadcast finishing time of a program for which a reservation for recording is made is late than the time of the reservation.

In this Fig. 9, a tuner part 32 takes out a video signal and/or a voice signal from a television broadcasting or a radio broadcasting transmitted via an antenna part 31 and sends the video signal and/or the voice signal to a picture and sound recording part 34.

A reservation information storing part 36 stores reservation information, such as a reserved recording starting time, a reserved recording finishing time, the channel or the frequency of the program which is wanted to be recorded by a reservation, and a recording mode, for example, such as a long tune recording mode or a standard recording mode which a user previously set. The reservation information stored in the reservation information storing part 36 is sent to a picture recording and sound recording controller 35, for example, when a reserved recording starting time comes.

The picture recording and sound recording controller 35 controls a received channel or a frequency by the tuner part 32 based on the reservation information supplied from the reservation information storing part 36 and controls on/off of picture recording and sound recording at the picture and sound recording part 34, thereby enabling reserved recording by the present recorder.

The constitution and operations described herein are similar to those for reserved recording in a general recorder. That is, in the reserved recording in a general recorder, on/off of picture recording and sound recording at the picture and sound recording part 34 is controlled only in accordance with the reservation information stored in the reservation information storing part 36.

On the other hand, the recorder of the embodiment of the present invention shown in Fig. 9 is provided with a program category classification part 33 having a function as the program category automatic classification device described above. A video signal and a voice signal are supplied from the tuner part 32 to the program category classification part 33, and using these signals the program category automatic classification is performed as described above. The information of a program category classified, for example, for each several ten seconds at the program category classification part 33 is sent to the picture recording and sound recording controller 35.

The picture recording and sound recording controller 35 at this time compares the information of the program category from the program category classification part 33 with the reservation information from the reservation information storing part 36, and, when determining that there is a necessity of extending a reserved recording starting time and/or a reserved recording finishing time set as the reservation information, controls the picture and sound recording part 34 so as to extend the reserved recording starting time and/or the reserved recording finishing time for picture recording and sound recording.

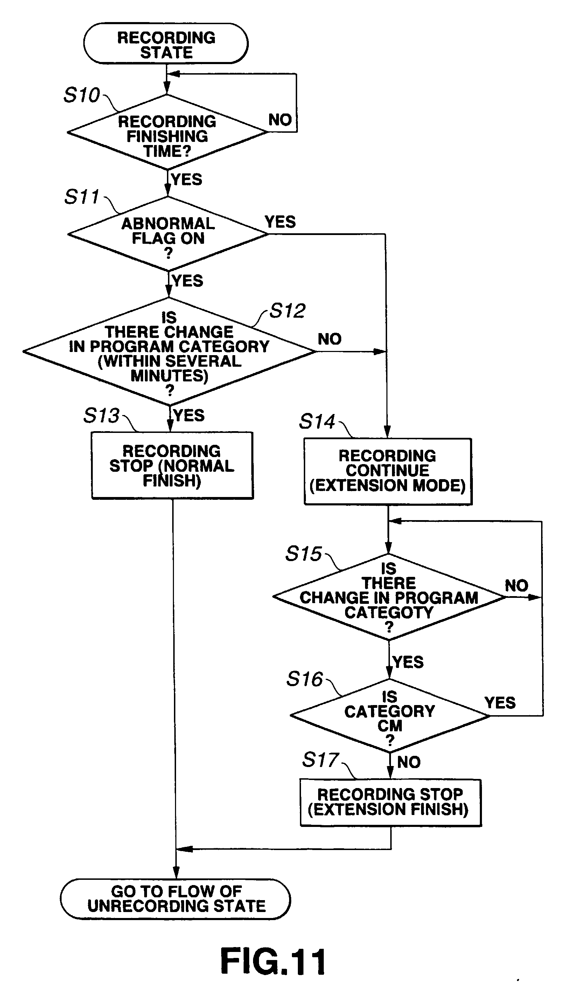

Fig. 10 and Fig. 11 show flow charts of operations in which the picture recording and sound recording controller 35 controls the picture and sound recording part 34 in accordance with the information from the program category classification part 33.

Fig. 10 shows an operational flow chart of the picture recording and sound recording controller 35 at the time of unrecording operation state at this time.

In this Fig. 10, the picture recording and sound recording controller 35 of the time of the unrecording operation state determines whether or not a starting time of a reserved recording comes based on reservation information stored in the reservation information storing part 36 and time information of an incorporated clock that is not shown in the drawing as processing of step S1.

When it is determined that the starting time of the reserved recording does not come yet at step S1 (NO), this determination processing of step S1 is repeated. At step S1 when it is determined that the starting time of the reserved recording has come (YES), the picture recording and sound recording controller 35 controls the frequency by the tuner part 32 and the picture and sound recording part 34 as processing of step S2 so as to start recording.

After starting recording at step S2, the picture recording and sound recording controller 35 determines whether or not there is any change of the program category within, for example, several minutes before starting recording employing the information of a program category from the program category classification part 33 as processing of step S3.

When it is determined that there is no change in the program category in the determination at this step S3 (NO), the picture recording and sound recording controller 35 proceeds to processing of step S5, and stands an abnormal flag up while supposing that there is a possibility that the broadcasting time of the program that is the earlier program of the program reserved for recording has been changed. That is, in this case, since the possibility that the earlier program is still continuing even at the reserved recording starting time is strong due to an extension of the broadcasting time of the earlier program of the program reserved for recording, the picture recording and sound recording controller 35 stands up the abnormal flag representing that the possibility that a broadcasting time has been changed is strong.

When it is determined that there has been a change in the program category by the decision at step S3 (YES), the picture recording and sound recording controller 35 proceeds to processing of step S4 and decides that the reserved recording is normally started. That is, in this case, since it is considered that the program reserved for recording is normally started at the reserved recording starting time due to the change in the program category because of finishing of the broadcasting time of the earlier program of the program reserved for recording on schedule, the picture recording and sound recording controller 35 does not particularly stand up the abnormal flag.

After processing of these step S4 and step S5, the processing of the picture recording and sound recording controller 35 moves on to the operational flow chart of the time of the recording operation state shown in Fig. 11.

In this Fig. 11, the picture recording and sound recording controller 35 of the time of the recording operation state determines whether or not the reserved recording finishing time has come based on the reservation information stored in the reservation information storing part 36 and the time information of the incorporated clock that is not shown in the drawing as processing of step S10.

When it is determined that the finishing time of the reserved recording does not come yet by a determination of step S10 (NO), this determination processing of step S10 is repeated. By a determination of step S10 when it is determined that the finishing time of the reserved recording has come (YES), the picture recording and sound recording controller 35 determines whether or not the abnormal flag is stood up as processing of step S11.

When by this determination of step S11 it is determined that the abnormal flag is not stood up (NO), the picture recording and sound recording controller 35 determines whether or not there has been a change in the program category, for example, within several minutes before the reserved recording finishing time, employing the information of the program category from the program category classification part 33 as processing of step S12.

When it is determined that there has been a change in the program category by the decision of step S12 (YES), the picture recording and sound recording controller 35 proceeds to processing of step S13, decides that the program reserved for recording has normally finished, and controls the picture and sound recording part 34 to stop recording. That is, in this case, since it is considered that the program reserved for recording has been recorded due to the change in the program category because of finishing of the broadcasting time of the program reserved for recording on schedule, the picture recording and sound recording controller 35 controls the picture and sound recording part 34 to stop recording and then returns to an unrecording operation state of Fig. 10.

When by a determination of step S11 it is determined that the abnormal flag is stood up (YES), the picture recording and sound recording controller 35 proceeds to processing of step S14 and controls the picture and sound recording part 34 so as to continue recording (move on to an extended recording mode). That is, that the abnormal flag is stood up shows that the possibility that the broadcast starting time of the program reserved is delayed from the reserved recording starting time is strong due to an extension of the broadcasting time of the earlier program, and accordingly the possibility that the broadcast finishing time of the program reserved for recording is also delayed. Thus, the picture recording and sound recording controller 35 controls the picture and sound recording part 34 so as to continue recording at step S14.

Also, when it is determined that there is no change in the program category within several minutes before a reserved recording finish by the determination of step S12 (NO), the picture recording and sound recording controller 35 proceeds to processing of step S14 and controls the picture and sound recording part 34 so as to continue recording (move on to the extended recording mode). That is, since that there is no change in the program category within several minutes before reserved recording may mean that the possibility that the broadcast finishing time of the program reserved for recording is delayed is strong, the picture recording and sound recording controller 35 controls the picture and sound recording part 34 so that recording is continued at step S14.

After recording is made continued at step S14, the picture recording and sound recording controller 35 determines whether or not there has been a change in the program category, employing the information of the program category from the program category classification part 33 as processing of step S15. That is, for example, when broadcasting of the program under continuous recording finishes, since the program category is supposed to change, the picture recording and sound recording controller 35 determines whether or not there is a change of the program category at step S15.

When it is determined that there has been no change in the program category at step S15 (NO), determination processing of step S15 is repeated. When it is determined that there has been a change in the program category at step S15 (YES), the picture recording and sound recording controller 35 determines whether or not the program category after the change shows a CM, employing the information the program category from the program category classification part 33 as step S16. That is, even when it is determined that the program category under the continuous recording is changed at step S15, since there is a possibility that the category change may be because of a CM, the picture recording and sound recording controller 35 determines whether or not the change in the program category is due to a CM. When it is determined that the program category change is due to a CM at step S16, that is, when it is determined that the program category is the CM (YES), since there is a possibility that the program under the continuous recording further continues, the picture recording and sound recording controller 35 returns to the processing of step S15.

When it is determined that the program category is not the CM at step S16 (NO), the picture recording and sound recording controller 35 compares the program category after the change with the program category before the change as processing of step S17 and controls the picture and sound recording part 34 so as to stop recording the program under continuous recording when the program categories differ. That is, it is considered that the broadcast of the program under continuous recording is finished since it is determined that there has been a program category change at step S15 and further it is determined that the program category after the change is not the CM at step S16. Thus, the picture recording and sound recording controller 35 stops the recording operation of the picture and sound recording part 34.

Therefore, the program whose broadcasting time is extended can be recorded until the end. The picture recording and sound recording controller 35 returns to the unrecording operation state of Fig. 10 after controlling the picture and sound recording part 34 to stop recording at step S17.

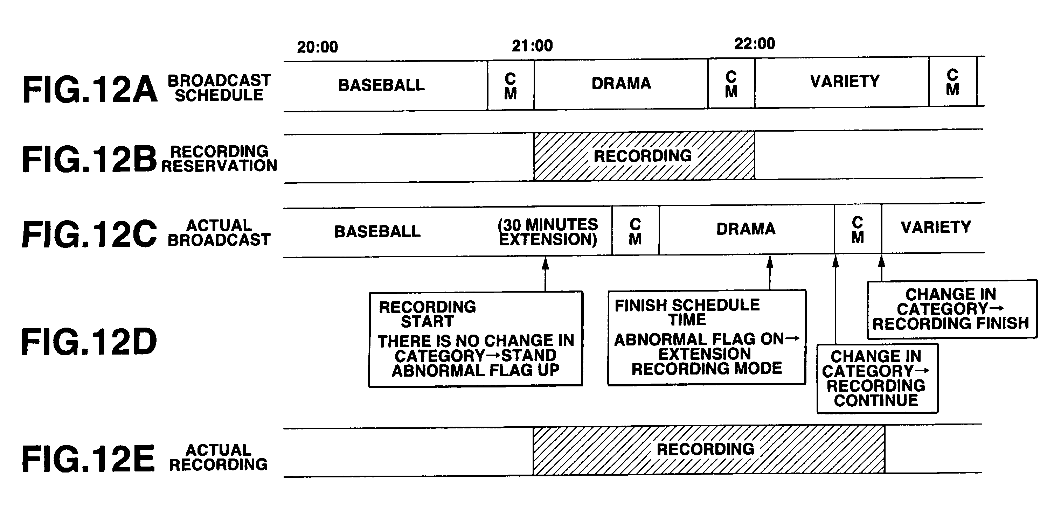

Referring to Fig. 12, how the recorder of Fig. 9 operates for an actual broadcasting will be explained.

In (a) in this Fig. 12, program contents on broadcast schedule in a time series are shown. In this example, a baseball is broadcasted before 21:00, a drama starts from 21:00 after the baseball broadcasting is finished, interposing CMs therebetween, and further a variety show program is broadcasted from 22:00 interposing CMs there between. In (b) in Fig. 12, the program reserved for recording (from a reserved recording starting time to an end) is shown. In this example, reserved recording is started from 21:00 and reserved recording is finished at 22:00, that is, the drama is recorded by a reservation among programs on schedule. In (c) in Fig. 12, actually broadcasted program contents are shown. In this example, among the programs on schedule the baseball broadcast is, for example, extended for 30 minutes, and accompanied with this extension the broadcasting times of the following programs on schedule are moved back, respectively, one after another.

In (d) in Fig. 12, the contents of the operations of the recorder of Fig. 9 are shown. In the case of this example, although the recorder starts recording from the reserved recording starting time of (b) in Fig. 12, at this time, since the program category has not been changed from the earlier program (baseball), the abnormal flag is stood up. The recorder at this time continuously records (sets the extended recording mode) since the abnormal flag is stood up even when the reserved recording finishing time (planned finishing time) of(b) in Fig. 12 comes. Next, in (c) in Fig. 12, the recorder detects a change in the program category at the broadcast starting time of CMs after the broadcast of the drama while continuously recording at this moment. Later, when the recorder detects a change in the program category at the broadcast finishing time of CMs following the broadcast of the drama (at the starting time of the next variety show broadcast), it finishes recording. Accordingly, actual recording in the recorder is started at 21:00 and is finished after the CMs following the drama shifted by the extension of the baseball broadcast (at the starting time of the variety show program).

Next, the program category automatic classification device of the embodiment of the present invention described above can be applied not only to the recorder shown in Fig. 9 but also to a device, for example, (a program automatic filtering device) provided with an automatic filtering function which registers allowance and/or disallowance of viewing various programs for each distinct program category of various programs and according to the contents of registration automatically filters viewing of programs.

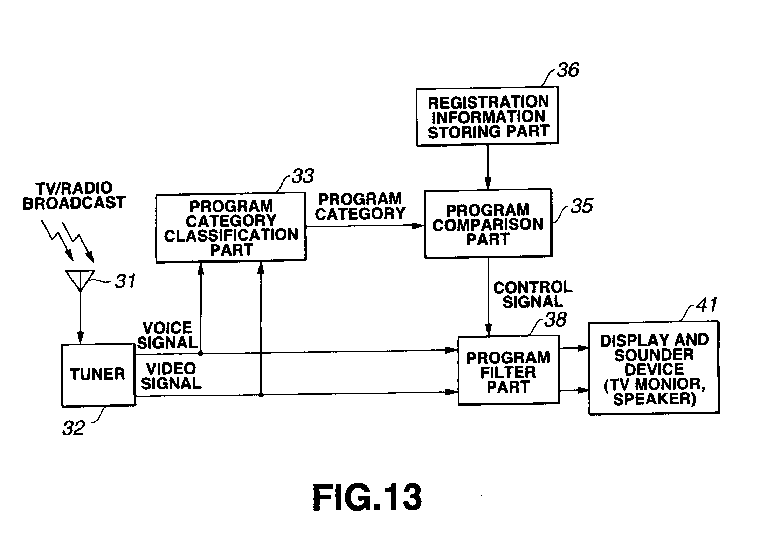

Fig. 13 shows an outlined constitution of a program automatic filtering device to which the program category automatic classification device of the feature of the present embodiment is applied.

That is, the program automatic filtering device shown in this Fig. 13, provided with the function of the program category automatic classification device of the embodiment of the present invention described above, automatically classifies a category of a program actually broadcasted, detects a program corresponding to the program category registered in advance based on the result of the classification, determines allowance and/or disallowance of viewing of an actually broadcasted program based on the result of the detection, and controls a supply or a stop of a video signal and a voice signal for a display and sounder device, such as a television monitor or a speaker in accordance with the result of the determination. In Figs. 9 and 13, like reference numerals indicate like constitutional elements whose explanation is omitted for Fig. 13.

In this Fig 9, a video signal and a voice signal outputted from the tuner part 32 are sent to a program filter part 38. A display and sounder device 41, for example, composed of a television monitor, a speaker, and the like, displays an image based on a video signal outputted from the program filter part 38 and sounds voice based on a voice signal.

A registered information storing part 40 stores registered information for each program category that a user sets in advance. As the registered information stored in the registered information storing part 40, a program category of the program which a user does not want to view or a program which he does not want someone to view (hereafter, referred to as a viewing disallowance program category) and a program category of the program which he wants to view or wants someone to view (hereafter, referred to as a viewing allowance program category) are come up with. In the registered information storing part 40, either one of or both of the viewing disallowance program category or/and the viewing allowance program category can be stored as the registered information. Of course, it is possible not to store any registered information in the registered information storing part 40. The registered information stored in the registered information storing part 40 is sent to a program comparison part 39.

The program comparison part 39 compares information ofthe program category that the program category classification part 33 classified from a video signal and a voice signal of a program currently received with the registered information supplied from the registered information storing part 40 and from the result of the comparison determines allowance and/or disallowance of viewing of a program currently received.

Here, the following three method examples are deemed as methods for determining allowance and/or disallowance of program viewing in the program comparison part 39.

As the first determining method example, a method is deemed in which viewing only a program which agrees with the viewing allowance program category is allowed (viewing a program which does not agree with the viewing allowance program category is not allowed) when registered information only of the viewing allowance program category is stored in the registered information storing part 40.

As the second determining method example, a method is deemed in which viewing only a program which agrees with the viewing disallowance program category is not allowed (viewing a program which does not agree with the viewing disallowance program category is allowed) when registered information only of the viewing disallowance program category is stored in the registered information storing part 40.

As the third determining method example, a method is deemed in which viewing of a program agreeing with the viewing disallowance program category is not allowed and viewing of a program agreeing with the viewing allowance program category is allowed when registered information both of the viewing allowance program category and the viewing disallowance program category is stored in the registered information storing part 40.

In the case of the third determining method example, with respect to the other programs which belong to neither one of the viewing allowance program category and the viewing disallowance program category, further, the following three dealing method examples are deemed depending on which one of allowance or disallowance of viewing should be chosen.

The case in which an earlier result of a determination is maintained as it is regarding the other programs as the first dealing example, the case in which viewing is allowed regarding all the other programs as the second dealing example, and the case in which viewing is disallowed regarding all the other programs as the third dealing example may be deemed.

By each determining method example and dealing examples described above, the program comparison part 39 controls the program filter part 38 to have it start outputting a video signal and a voice signal of a program currently received to the display and sounder device 41 of the latter part when determining allowance of viewing of the program and, conversely, controls the program filter part 38 to have it stop outputting the video signal and the voice signal of the program to the display and sounder device 41 of the latter part when determining disallowance of viewing of the program currently received.

With this, by the program automatic filtering device shown in this Fig. 13, allowance/disallowance of viewing of a program currently received can be automatically performed according to the program category registered in advance.

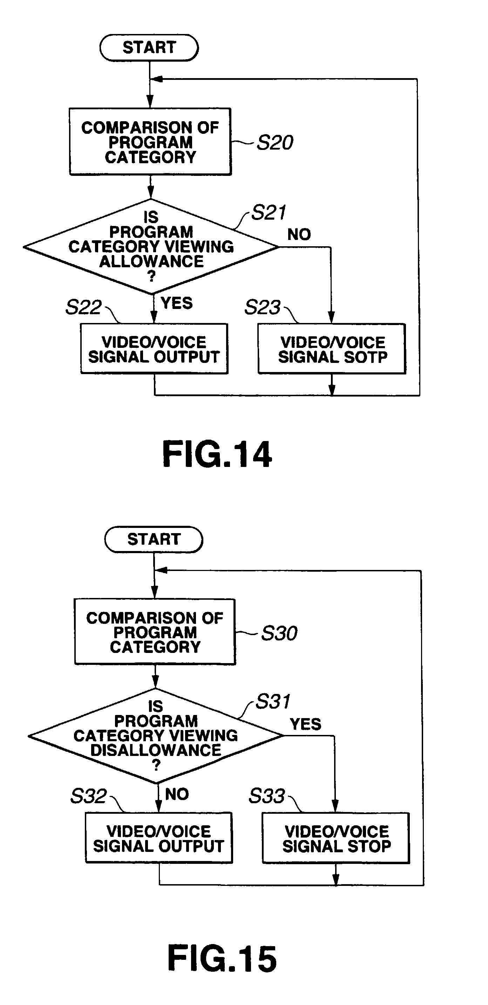

Fig. 14 to Fig. 16 show flow charts of operations in which the program comparison part 39 decides allowance/ disallowance of viewing according to the information from the program category classification part 33 and controls filtering at the program filter part 38.

Fig. 14 shows a flow chart of the case in which a determination to allow viewing only the program agreeing with the viewing allowance program category (not to allow viewing the program which does not agree with the viewing allowance program category) is performed at the program comparison part 39 in the case in which registered information only of the viewing allowance program category is stored in the registered information storing part 40 as in the first determining method example.

In this Fig. 14, the program comparison part 39 compares the registered information stored in the registered information storing part 40 with the program category information from the program category classification part 33 as processing of step S20 and then determines whether or not the category of the program currently received agrees with the viewing allowance program category based on the result of the comparison of step S20 at step S21.

In the determination of step S21, when it is determined that the category of the program currently received agrees with the viewing allowance program category (YES), the program comparison part 39 controls the program filter part 38 so that the video signal and the voice signal that the tuner part 32 currently receives and outputs are supplied to the display and sounder device 41 (so that one can view) as processing of step S22.

In the determination of step S21, when it is determined that the category of the program currently received does not agree with the viewing allowance program category (NO), the program comparison part 39 controls the program filter part 38 so that the video signal and the voice signal that the tuner part 32 currently receives and outputs are not supplied to the display and sounder device 41 (so that one cannot view) as processing of step S23.

After step S22 and step S23, the program comparison part 39 returns to the processing of step S20 and continues the comparison of program categories. That is, the program comparison part 39 constantly compares program categories as the processing of step S20 regardless of whether or not the video signal and the voice signal are supplied to the display and sounder device 41.

Fig. 15 shows a flow chart of the case in which a determination not to allow viewing only the program agreeing with the viewing disallowance program category (to allow viewing the program which does not agree with the viewing disallowance program category) is performed at the program comparison part 39 in the case in which registered information only of the viewing disallowance program category is stored in the registered information storing part 40 as in the second determining method example.

In this Fig. 15, the program comparison part 39 compares the registered information stored in the registered information storing part 40 with the program category information from the program category classification part 33 as processing of step S30 and then determines whether or not the category of the program currently received agrees with the viewing disallowance program category based on the result of the comparison of step S30 at step S31.

In the determination of step S31, when it is determined that the category of the program currently received does not agree with the viewing disallowance program category (NO), the program comparison part 39 controls the program filter part 38 so that the video signal and the voice signal that the tuner part 32 currently receives and outputs are supplied to the display and sounder device 41 (so that one can view) as processing of step S32.

In the determination of step S31, when it is determined that the category of the program currently received agrees with the viewing disallowance program category (YES), the program comparison part 39 controls the program filter part 38 so that the video signal and the voice signal that the tuner part 32 currently receives and outputs are not supplied to the display and sounder device 41 (so that one cannot view) as processing of step S33.

After step S32 and step S33, the program comparison part 39 returns to the processing of step S30 and continues the comparison of program categories. That is, the program comparison part 39 constantly compares program categories as the processing of step S30 regardless of whether or not the video signal and the voice signal are supplied to the display and sounder device 41.

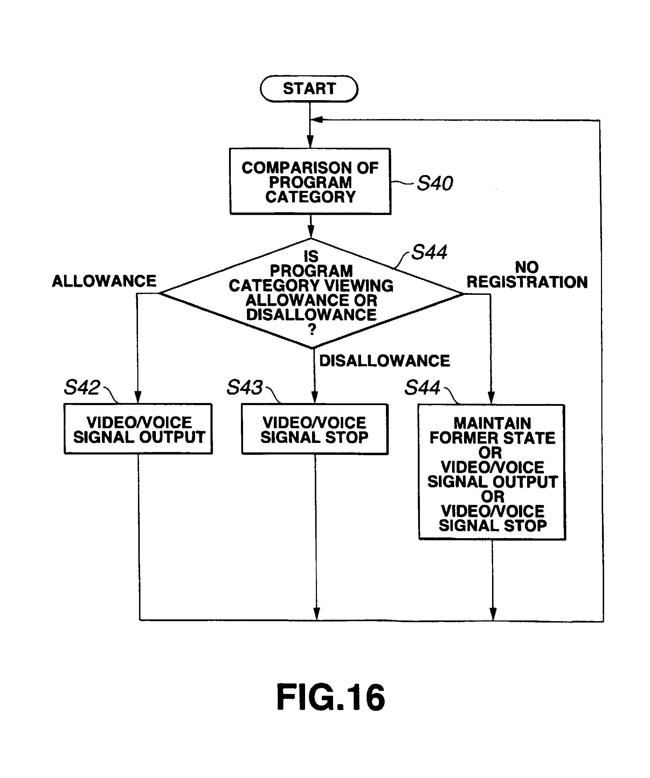

Fig. 16 shows a flow chart of the case in which a determination not to allow viewing the program agreeing with the viewing disallowance program category and to allow viewing the program agreeing with the viewing allowance program category is performed at the program comparison part 39 in the case in which registered information of both viewing allowance program category and viewing disallowance program category is stored in the registered information storing part 40 as in the third determining method example.

In this Fig. 16, the program comparison part 39 compares the registered information stored in the registered information storing part 40 with the program category information from the program category classification part 33 as processing of step S40 and then determines whether the category of the program currently received corresponds to the viewing allowance program category or the viewing disallowance program category or none of these, i.e., the other program categories based on the result of the comparison of step S40 at step S41.

In the determination of step S41, when it is determined that the category of the program currently received corresponds to the viewing allowance program category (ALLOWANCE), the program comparison part 39 controls the program filter part 38 so that the video signal and the voice signal that the tuner part 32 currently receives and outputs are supplied to the display and sounder device 41 (so that one can view) as processing of step S42.

In the determination of step S41, when it is determined that the category of the program currently received corresponds to the viewing disallowance program category (DISALLOWANCE), the program comparison part 39 controls the program filter part 38 so that the video signal and the voice signal that the tuner part 32 currently receives and outputs are not supplied to the display and sounder device 41 (so that one cannot view) as processing of step S43.

Further, in the determination of step S41, when it is determined that the category of the program currently received corresponds to the other program categories which are neither the viewing allowance program category nor the viewing disallowance program category (NO REGISTRATION), as processing of step S44 the program comparison part 39 performs any one of dealing examples, that is, a dealing operation in which an earlier result of a determination is maintained as it is regarding the other programs as in the first dealing example described earlier, a dealing operation in which viewing is entirely allowed regarding the other programs (the video signal and the voice signal currently received are supplied to the display and sounder device 41) as in the second dealing example, and viewing is entirely disallowed regarding the other programs (the video signal and the voice signal currently received are not supplied to the display and sounder device 41) as in the third dealing example.

After these step S42, step S43, and step S44, the program comparison part 39 returns to the processing of step S40 and continues the comparison of program categories. That is, the program comparison part 39 constantly compares program categories as the processing of step S40 regardless of whether or not the video signal and the voice signal are supplied to the display and sounder device 41.

Next, the program category automatic classification device of the embodiment of the present invention described above can be applied not only to the device shown in Fig. 9 or Fig. 13 but also to a device, for example, having a function in which each broadcast program is recorded while being edited for each program category of various broadcast program (an automatic program editing device).

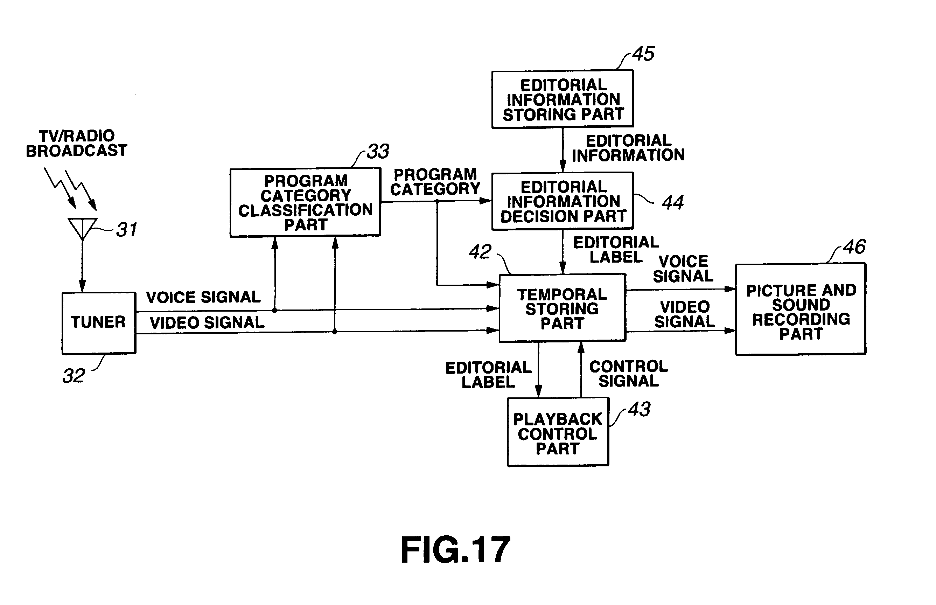

Fig. 17 shows an outlined constitution of an automatic program editing device to which the program category automatic classification device of the feature of the present embodiment is applied.

That is, the automatic program editing device shown in Fig. 17, provided with the function of the program category automatic classification device of the embodiment of the present invention described above, automatically classifies a category of a broadcast program actually broadcasted, based on the result of the classification detects a program corresponding to the program category which is registered in advance, based on the result of the detection automatically edits and records a program actually broadcasted. In Figs. 9 and 17, like reference numerals indicate like constitutional elements whose explanation is omitted for Fig. 17.

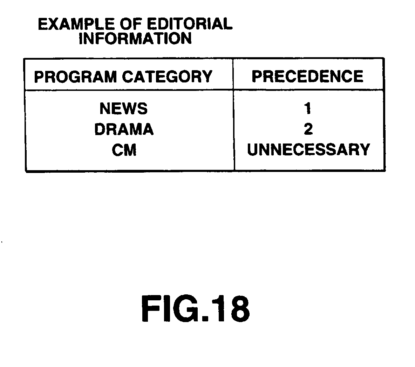

In this Fig. 17, a program category necessary and a program category unnecessary for editing which a user sets in advance and an editorial order (e.g., a precedence or a significance) are stored in an editorial information storing part 45 as editorial information. That is, program categories, such as, for example, news, a CM, a drama, and a precedence for each program category are stored in the editorial information storing part 45 as editorial information as shown Fig. 18. In the example of Fig. 18, setting is made in such a manner that the precedence of the news is the highest (PRECEDENCE 1) and the precedence of the drama is the next high (PRECEDENCE 2). The precedence of the CM is unnecessary and thus is not set. Editorial information stored in the editorial information storing part 45 is sent to an editorial information decision part 44.

Here, when the present automatic program editing device is set in a reception mode, the video signal and the voice signal that the frequency by the tuner part 32 currently receives and outputs are temporarily stored in a temporal storing part 42 composed, for example, of a hard disk or a magnetic tape, a magneto-optical disk, a digital video disk, and the like.

At the same time, information regarding program categories that the program category classification part 33 classified from a video signal and a voice signal of a program currently received is temporarily stored in the temporal storing part 42. Further, information regarding program categories from the program category classification part 33 is also sent to the editorial information decision part 44.

At the same time, the editorial information decision part 44 compares the information of the program categories supplied from the program category classification part 33 with the editorial information stored in the editorial infonnation storing part 45 and imparts an editorial label relative to the precedence of the editorial information for each program category. The editorial labels for each program category are temporarily stored in the temporal storing part 42.

Like this, the video signal and the voice signal currently received, the information of the program category of the broadcast program comprising these video signal and voice signal, and the editorial labels for each program category are temporarily, time synchronously stored in the temporal storing part 42.

Next, after receiving the broadcast program and finishing temporal, time synchronous recording of the video signal and the voice signal, the program categories, and the editorial labels in the temporal storing part 42, the automatic program editing device is shifted to an editorial mode.

After the shift to the editorial mode, a playback control part 43 controls the temporal storing part 42 so as to play back from the video signal and the voice signal of a program added an editorial label with a high precedence one by one according to the precedence of the editorial labels temporarily stored in the temporal storing part 42. Those whose precedences are the same orders (the same values) are played back in the order of broadcasting time.

The video signal and the voice signal of a program played back from the temporal storing part 42 according to an edited playback control by the playback control part 43 are recorded in a picture and sound recording part 46. That is, according to the automatic program editing device of Fig. 17, a program automatically edited in accordance with the editorial information set in advance as described above is recorded in the sound recording part 46.

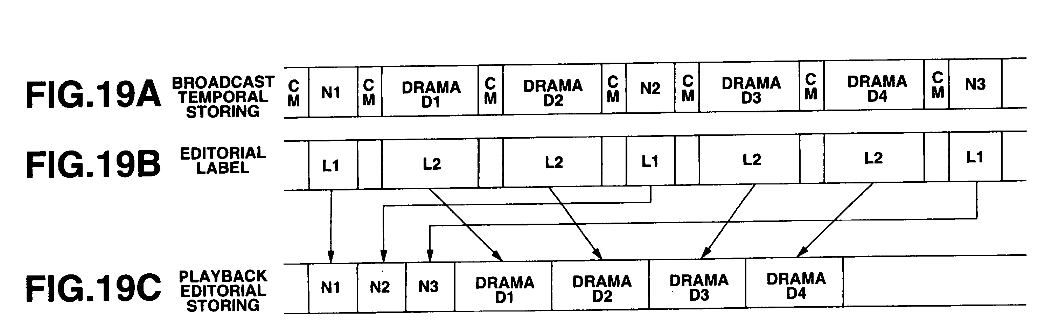

Below, a concrete operational example in the automatic program editing device will be explained using Fig. 19.

Fig. 7 (a) shows each program temporarily recorded in the temporal storing part 42, and the order of each program shows the broadcast order actually broadcasted. In this example, each program of the broadcast order of a CM, a news N1, a CM, a drama D1, a CM, a drama D2, a CM, a news N2, a CM, a drama D3, a CM, a drama D4, a CM, a news N3, ... from the left of the drawing sequentially is recorded in the temporal storing part 42.

Fig. 7 (b) shows the editorial labels added to each program except CMs, and in this example, respectively added are, from the left of the drawing one by one, an editorial label L1 representing that the precedence is a number 1 for the news N1, an editorial label L2 representing that the precedence is a number 2 for the drama D1, followed by similarly, an editorial label L2 for the drama D2, an editorial label L1 for the news N2, an editorial label L2 for the drama D3, an editorial label L2 for the drama D4, an editorial label L1 for the news N3 ....

Fig. 7 (c) shows the order of each program after editing in which the playback control part 43 plays back each program recorded in the temporal storing part 42 by the editorial order in accordance with the editorial labels added to each program and records them in the sound recording part 46. Here, it can be understood by Fig. 7 (c) that each news N1, N2, N3 is arranged earlier than each drama D1, D2, D3, D4 and each news and each drama to which the same values of editorial labels are added, respectively, are arranged in the broadcast time order since the editorial label L1 representing that the precedences are the number 1 is added to each news N1, N2, N3 and the editorial label L2 representing that the precedences are the number 2 is added to each drama D1, D2, D3, D4. Therefore, in this example case of Fig. 7 (c), the order of each program obtained after editing becomes the news N1, the news N2, the news N2, the drama D1, the drama D2, the drama D3, the drama D4, ....

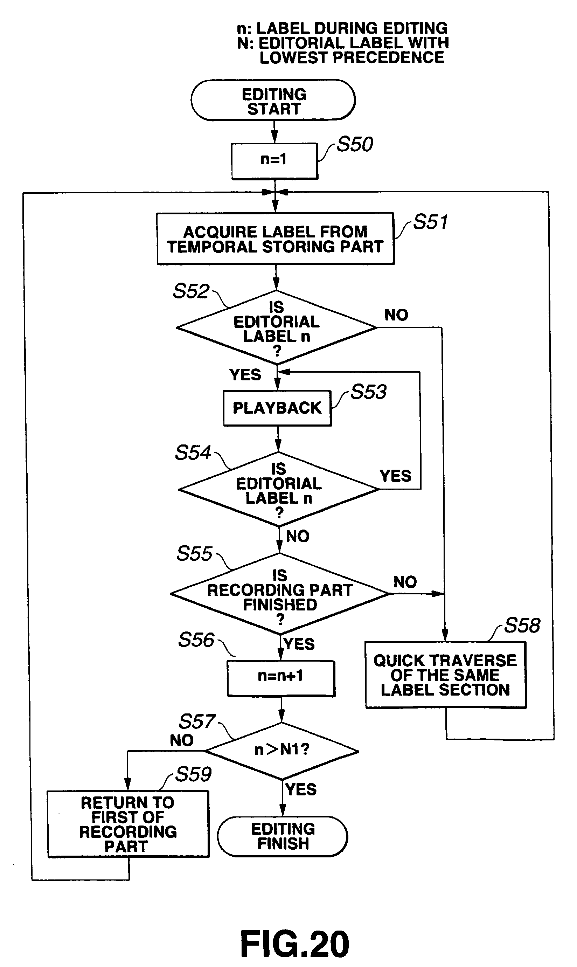

Fig. 20 shows a flow chart of an editorial processing operations in accordance with the editorial labels by the playback control part 43.

In this Fig. 20, at the time of starting editing, the playback control part 43 first makes a value n of the order of precedence of editing one as an initialization process of step S50.

Next, the playback control part 43 acquires the editorial labels from the temporal storing part 42 as processing of step S51 and then compares them with the value n of the order of precedence as processing of step S52.

At step S52 when it is determined that the value of the editorial label does not correspond to the value n of the order of precedence (NO), the playback control part 43 quickly traverses (skips) a section (a program) to which the same editorial label is assigned as processing of step S58 and then returns to processing of step S51 so as to acquire the editorial labels again from the temporal storing part 42.

At step S52 when the value of the editorial label corresponds to the value n of the order of precedence (YES), the playback control part 43 starts playback (starts readout of the video signal and the voice signal from the temporal storing part 42) as processing of step S53.

The playback control part 43 constantly confirms the values of the editorial labels of programs during playback as processing of step S54 and continues playback while the values of the editorial labels correspond to the value n of the order of precedence (YES).

Conversely, when the value of the editorial label differs from the value n of the order of precedence (NO) at step S54, the playback control part 43 confirms whether or not the playback of the video signal and the voice signal of the program recorded in the temporal storing part 42 entirely has finished. When it is determined not to have finished in confirmation processing of this step S54 (NO), the playback control part 43 performs the quick traverse (skip) as processing of step S58.

When it is determined to have finished in the confirmation processing of step S54 (YES), the playback control part 43 increases the value n of the order of precedence by one (one increment) and performs processing of the next order of precedence as processing of step S56.

Here, when the playback control part 43 performs a determination as to whether or not the value n of the order of precedence exceeds the lowest (N1) among the precedences appointed as processing of step S57 and determines that it does not (NO), that is, when editing of the one added the editorial label of the next precedence is appointed, the playback control part 43 returns a playback position of the temporal storing part 42 to the first of a recording part as processing of the step S59 and returns to step S51 so as to repeat the similar operations to those described above. When it is determined that the value n of the order of precedence exceeds the lowest value (N1) among the precedences in the determination processing of step S57 (YES), the playback control part 43 finishes editorial processing.

As described above, according to the program category automatic classification device of the embodiment of the present invention, a hierarchical processing structure for different time scales is provided, a program category, for example of a television broadcasting or a radio broadcasting or its change can be automatically classified within a little time (within about one minute), and a large number of categories can be handled by introducing probability like expressions for expressing a sound source category or a program category in an intermediate level.

Therefore, when the program category automatic classification device of the present embodiment is applied, for example, to a recorder with a reserved recording function, a reserved recording time automatic correction and extension device automatically correcting and automatically extending a reserved recording time can be realized.

Further, when the program category automatic classification device of the present embodiment is applied, for example, to a filtering device which performs filtering of a broadcast program, a program automatic filtering device which automatically allows and/or disallows viewing of a program can be realized, and, for example, automatically skipping a CM becomes possible.

Moreover, when the program category automatic classification device of the present embodiment is applied, for example, to a program editing device, an automatic program editing device in which automatic editing is possible in accordance with the significance of a broadcast program can be realized.

In the embodiments of the present inventions, although an example in which program categories of various broadcast programs broadcasted by a general television broadcasting, a cable television broadcasting, a satellite broadcasting, a communications broadcasting, a radio broadcasting, or the like are classified is given, the present inventions are not limited to broadcast programs but, for example, can be also applied to a use in which a category of a program recorded in a recording medium is automatically classified.

**Claims**

**1.** A signal processing device comprising;

    a hierarchical framing means for framing a signal in a plurality of hierarchical distinct time sections;
    a processing means for processing signals in each hierarchical frame for each hierarchy; and
    a category determining means for determining the category of the signal based on the result of the processing.

**2.** The signal processing device of claim 1, wherein

    said hierarchical framing means frames a video signal and/or a voice signal;
    said processing means processes said video signal and/or said voice signal and generates a predetermined classification parameter representing a feature ofthe signal; and
    said category determining means determines said category based on said classification parameter.

**3.** The signal processing device of claim 1, wherein said category determining means determines said category employing a probability in accordance with a result of said processing.

**4.** The signal processing device of claim 1 further comprising a control means for controlling a desired device based on a result of determining said category.

**5.** The signal processing device of claim 4, wherein said control means controls a reserved recording time of a device provided with a reserved recording function.

**6.** The signal processing device of claim 4, wherein said control means controls, in a device provided with a function for filtering said signal, operation of said filtering.

7.  The signal processing device of claim 4, wherein said control means controls, in a device provided with a function for editing said signal, operation of said editing.

8.  The signal processing device of claim 7, wherein said device provided with the function for editing said signal has a temporal storing means for temporarily storing said signal; and
    said control means controls said editing operation by reading the signal temporarily stored in said temporal storing means in accordance with a precedence of editing.

9.  A signal processing method comprising the steps of framing a signal in a plurality of hierarchical distinct time sections, processing signals in each hierarchical frame for each hierarchy, and determining the category of the signal based on the result of the processing.

10. The signal processing method of claim 9, wherein

    a video signal and/or a voice signal are framed,
    said video signal and/or said voice signal are processed so as to generate a predetermined classification parameter representing a feature of the signal, and
    said category is determined based on said classification parameter.

11. The signal processing method of claim 9, wherein said category is determined employing a probability in accordance with a result of said processing.

12. The signal processing method of claim 9 further comprising the step of controlling a desired device based on a result of determining said category.

13. The signal processing method of claim 12, wherein a reserved recording time of a device provided with a function of recording by reservation is controlled.

14. The signal processing method of claim 12, wherein in a device provided with a function for filtering said signal, operation of said filtering is controlled.

15. The signal processing method of claim 12, wherein in a device provided with a function for editing said signal, operation of said editing is controlled.

16. The signal processing method of claim 15, wherein said device provided with the function for editing said signal temporarily stores said signal, and
    said editing operation is controlled by reading the signal temporarily stored in accordance with a precedence of editing.

# FIG.1

**STREAM PROCESSING PART (6)**
- 29 — PROGRAM CATEGORY DISCRIMINATION PART
- 27 — HISTORY INTEGRATION PART
- 28 — HISTORY STORING PART
- $Z_r$ → PROGRAM CATEGORY (7)

**LONG TIME SIGNAL PROCESSING PART (5)**
- 26 — CATEGORY CLASSIFICATION VECTOR GENERATION PART
- 23 — VQ CODE NOTE
- 22 — VQ COMPUTING PART
- 24 — RULE PROCESSING PART
- 25 — RULE TABLE
- 21 — FEATURE EXTRACTION PART
- $Y_r$
- $\xi_q$

**INTERMEDIATE TIME SIGNAL PROCESSING PART (4)**
- 20 — CLASSIFICATION VECTOR GENERATION PART
- 19 — VQ CODE NOTE
- 18 — VQ COMPUTING PART
- 17 — FEATURE EXTRACTION PART
- $X_q$
- $U_p$

**SHORT TIME SIGNAL PROCESSING PART (3)**
- 16 — FEATURE VECTOR GENERATION PART
- 11 — WAVEFORM STATISTICAL ANALYSIS PART
- 12 — SPECTRUM ANALYSIS PART
- LPC ANALYSIS PART
- 13 — IMAGE STATISTICAL ANALYSIS PART
- 14 — DYNAMIC IMAGE PROCESSING PART
- VOICE SIGNAL (1)
- IMAGE SIGNAL (2)

EP 1 067 788 A2

**PROGRAM CATEGORY**
**CLASSIFICATION**
**RESULT**

| STREAM PROCESSING |
|---|

$z_1$ $z_2$

**SUCCESSIVE STREAM PROCESSING** →

$y_1$ $y_2$ ...

**CATEGORY PROBABILITY VECTOR**

| LONG TIME SIGNAL PROCESSING |
|---|

$x_1$ $x_2$ ... $X_Q$

**CLASSIFICATION VECTOR**

| INTERMEDIATE TIME SIGNAL PROCESSING |
|---|

...

**FEATURE VECTOR**

$u_1$ $u_2$ ... $u_p$

| SHORT TIME SIGNAL PROCESSING |
|---|

$T_a$

$W_a(33ms)$

$T_m$

$W_m(1s)$

$T_1$

$W_1(30s)$

# FIG.2

SHORT TIME SIGNAL PROCESSING:
PROCESSING UTILIZED AND FEATURE AMOUNT OBTAINED

| PROCESSING | FEATURE AMOUNT (ELEMENT OF VECTOR Up) | DIMENSION |
|---|---|---|
| WAVEFORM STATISTICAL ANALYSIS | SHORT TIME POWER | 1 |
| SPECTRUM ANAYSIS | CENTER OF GRAVITY OF SPECTRAL ENVELOPE<br>VARIANCE OF SPECTRAL ENVELOPE<br>HARMONIC STRUCTURAL DEGREE | 1<br>1<br>2 |
| LINER PREDICTION ANALYSIS(LPC) | LPC COEFFICIENT<br>LPC RESIDUALS ENERGY<br>PITCH FREQUENCY | 12<br>1<br>1 |
| IMAGE STATISTICAL ANALYSIS | INTENSITY MEAN<br>INTENSITY VARIANCE | 1<br>1 |
| DYNAMIC IMAGE PROCESING | BETWEEN FRAME DIFFERENCE PART ENERGY | 1 |

# FIG.3

INTERMEDIATE TIME SIGNAL PROCESSING:
ELEMENT OF CLASSIFICATION VECTOR Xa

| KINDS OF ELEMENTS | VECTOR ELEMENT |
|---|---|
| SOUND SOURCE CATEGORY PROBABILITY | SILENCE<br>VOICE<br>MUSIC<br>MUSIC AND VOICE<br>MULTIPLE TALKER VOICE<br>CHEER<br>AUTOMOBILE SOUND<br>MACHINEOPERATION SOUND<br>TIME SIGNAL<br>OTHERS |
| SOUND SOURCE FEATURE AMOUNT<br><br>IMAGE FEATURE AMOUNT | MEAN AND VARIANCE OF SHORT TIME POWER<br>MEAN AND VARIANCE OF PITCH FREQUENCY<br>CENTER OF GRAVITY OF SPECTRAL ENVELOPE AND SECOND MOMENT<br>BLACK FRAME TIME<br>SCENE CHANGE TIME |

# FIG.4

**LONG TIME SIGNAL PROCESSING:**
**FEATURE AND PROCESSING OF FEATURE EXTRACTION PART**

| FEATURE AMOUNT | |
|---|---|
| MUSICALITY | WHETHER OR NOT SECTION WITH A STRONG MUSIC POSSIBILITY CONTINUES |
| SINGLE TALKER CHARACTER | WHETHER OR NOT SECTION WITH STRONG MUSIC POSSIBILITY CONTINUES AND PITCH FREQUENCY MEAN GOES IN A CONSTANT RANGE |
| CONVERSATIONAL CHARACTER | WHETHER OR NOT SECTION WITH STRONG MUSIC POSSIBILITY CONTINUES AND PITCH FREQUENCY MEAN HAS JUMP |
| TIME SIGNAL CHARACTER | WHETHER OR NOT THERE IS SECTION WITH STRONG PROBABILITY OF TIME SIGNAL |
| SILENCE REGULARLY | WHETHER OR NOT THERE IS SILENT INTERVAL REGULARLY (E.G., FOR EACH 15 SECONDS) |
| BLACK LEVEL REGULARLY | WHETHER OR NOT THERE IS BLACK LEVEL INTERVAL REGULARLY (E.G., FOR EACH 15 SECONDS) |
| CM OR NON-CM | WHETHER OR NOT IT IS CHANNEL IN WHICH THERE IS NO CM BROADCAST (UTILIZING CHANNEL NUMBER AND CHANNEL AREA CODE) |

# FIG.5

EP 1 067 788 A2

LONG TIME SIGNAL PROCESSING:
EXAMPLE OF RULE TABLE

| FEATURE | RULES |
|---|---|
| THERE IS SINGLE TALKER CHARACTER | INCREASE PROBABILITY OF NEWS |
| THERE IS CONVERSATIONAL CHARACTER | INCREASE PROBABILITY OF DRAMA AND VARIETY SHOW |
| THERE IS SILENCE REGULARLY | INCREASE PROBABILITY OF CM |
| THERE IS BLACK LEVEL REGULARLY | INCREASE PROBABILITY OF CM |
| THERE IS MUSICALITY | INCREASE PROBABILITY OF MUSIC PROGRAM |
| IT IS CHANNEL WITHOUT CM | MAKE PROBABILITY OF CM ZERO |
| THERE IS TIME SIGNAL CHARACTER | INCREASE PROBABILITY OF BORDER AND DECREASE PROBABILITY OF MUSIC PROGRAM (SINCE TIME SIGNAL IS NOT RINGED USUALLY DURING MUSIC PROGRAM) |
| THERE IS TIME SIGNAL CHARACTER | MAKE $\xi$ 0.9 |
| THERE IS NO SCENE CHANGE | MAKE $\xi$ 0.1 |

# FIG.6

# FIG.7A

ACTUAL
BROADCAST

ANNOUNCER SPEAKING | ENDING MUSIC

# FIG.7B

INTERMEDIATE TIME
SIGNAL PROCESSING
OUTPUT (SOUND
SOURCE PROBABILITY)

| SMTO | SMTO | SMTO | SMTO | SMTO | SMTO | SMTO | SMTO | SMTO | SMTO | SMTO | SMTO |

S: SPEECH
M: MUSIC
T: TIME SIGNAL
O: OTHERS

# FIG.7C

LONG TIME SIGNAL
PROCESSING

PROGRAM CATEGORY PROBABILITY
COMPUTATION BY STATISTICAL
DISCRIMINATION DEVICE(VQ)

N: NEWS
M: MUSIC
C: CM
P: PROGRAM CHANGE
O: OTHERS

NMCPO

| SINGLE TALKER CHARACTER | ○ N:1 |
| CONVERSATIONAL CHARACTER | × |
| TIME SIGNAL CHARACTER | × |
| MUSICALITY | ○ M:1 |
| CHANNEL WITHOUT CM | ○ C:0 |

NMCPO

EP 1 067 788 A2

EP 1 067 788 A2

# FIG.8A

**ACTUAL BROADCAST**

| ANNOUNCER SPEAKING | ENDING MUSIC | TIME SIGNAL | OPENING MUSIC |

# FIG.8B

**INTERMEDIATE TIME SIGNAL PROCESSING OUTPUT (SOUND SOURCE PROBABILITY)**

S M T O | S M T O | S M T O | S M T O | S M T O | S M T O | S M T O | S M T O | S M T O | S M T O | S M T O | S M T O

# FIG.8C

**LONG TIME SIGNAL PROCESSING**

PROGRAM CATEGORY PROBABILITY COMPUTATION BY STATISTICAL DISCRIMINATION DEVICE(VQ)

N M C P O

| SINGLE TALKER CHARACTER | × |
| CONVERSATIONAL CHARACTER | × |
| TIME SIGNAL CHARACTER | ○ P:1,M:1 |
| MUSICALITY | ○ M:1 |
| CHANNEL WITHOUT CM | ○ C:0 |

N M C P O

EP 1 067 788 A2

FIG.9

FIG.10

S10

RECORDING
STATE

RECORDING
FINISHING
TIME? —— NO

↓ YES

S11

ABNORMAL
FLAG ON
? —— YES

↓ YES

S12

IS
THERE CHANGE
IN PROGRAM CATEGORY
(WITHIN SEVERAL
MINUTES)
? —— NO

↓ YES

S13

RECORDING
STOP (NORMAL
FINISH)

S14

RECORDING
CONTINUE
(EXTENSION MODE)

S15

IS
THERE
CHANGE IN PROGRAM
CATEGOTY
? —— NO

↓ YES

S16

IS
CATEGORY
CM
? —— YES

↓ NO

S17

RECORDING STOP
(EXTENSION FINISH)

GO TO FLOW OF
UNRECORDING STATE

## FIG.11

28

EP 1 067 788 A2

|  | | 20:00 | 21:00 | 22:00 | |

**FIG.12A** BROADCAST SCHEDULE

| BASEBALL | C M | DRAMA | C M | VARIETY | C M |

**FIG.12B** RECORDING RESERVATION

| RECORDING |

**FIG.12C** ACTUAL BROADCAST

| BASEBALL | (30 MINUTES EXTENSION) | C M | DRAMA | C M | VARIETY |

**FIG.12D**

RECORDING START
THERE IS NO CHANGE IN CATEGORY→STAND ABNORMAL FLAG UP

FINISH SCHEDULE TIME
ABNORMAL FLAG ON→ EXTENSION RECORDING MODE

CHANGE IN CATEGORY→ RECORDING CONTINUE

CHANGE IN CATEGORY→ RECORDING FINISH

**FIG.12E** ACTUAL RECORDING

| RECORDING |

**FIG.13**

START

COMPARISON OF
PROGRAM
CATEGORY — S20

IS
PROGRAM
CATEGORY VIEWING
ALLOWANCE
? — S21

NO

YES

S22 — VIDEO/VOICE
SIGNAL OUTPUT

S23 — VIDEO/VOICE
SIGNAL SOTP

## FIG.14

START

COMPARISON OF
PROGRAM
CATEGORY — S30

IS
PROGRAM
CATEGORY VIEWING
DISALLOWANCE
? — S31

YES

NO

S32 — VIDEO/VOICE
SIGNAL OUTPUT

S33 — VIDEO/VOICE
SIGNAL STOP

## FIG.15

FIG.16

**EXAMPLE OF EDITORIAL
INFORMATION**

| PROGRAM CATEGORY | PRECEDENCE |
|---|---|
| NEWS | 1 |
| DRAMA | 2 |
| CM | UNNECESSARY |

# FIG.18

EP 1 067 788 A2

**FIG.19A** BROADCAST TEMPORAL STORING: CM | N1 | CM | DRAMA D1 | CM | DRAMA D2 | CM | N2 | CM | DRAMA D3 | CM | DRAMA D4 | CM | N3

**FIG.19B** EDITORIAL LABEL: L1 | L2 | L2 | L1 | L2 | L1 | L2 | L1

**FIG.19C** PLAYBACK EDITORIAL STORING: N1 | N2 | N3 | DRAMA D1 | DRAMA D2 | DRAMA D3 | DRAMA D4

35

n: LABEL DURING EDITING
N: EDITORIAL LABEL WITH
LOWEST PRECEDENCE

EDITING
START

n=1 *S50*

ACQUIRE LABEL FROM
TEMPORAL STORING PART *S51*

*S52* IS
EDITORIAL
LABEL n
? NO

YES

PLAYBACK *S53*

*S54* IS
EDITORIAL
LABEL n
? YES

NO

*S55* IS
RECORDING PART
FINISHED
? NO

*S56* YES

n=n+1

QUICK TRAVERSE
OF THE SAME
LABEL SECTION *S58*

*S57* NO
n>N1?

*S59*

YES

RETURN TO
FIRST OF
RECORDING
PART

EDITING
FINISH

FIG.20